# EUROPEAN PATENT APPLICATION

(11) **EP 4 675 807 A1**
(43) Date of publication of application: **07.01.2026**
(21) Application number: 23957978.2
(22) Date of filing: 09.11.2023
(51) Int. Cl.: H01M 50/342

(54) **BATTERY CELL, BATTERY AND ELECTRIC DEVICE**

(71) Applicant: Contemporary Amperex Technology Co., Limited, Ningde, Fujian 352100 (CN)
(72) Inventor: CHEN, Xinxiang, Ningde, Fujian 352100 (CN); YANG, Rui, Ningde, Fujian 352100 (CN); JIN, Haizu, Ningde, Fujian 352100 (CN); WANG, Peng, Ningde, Fujian 352100 (CN); HUANG, Shoujun, Ningde, Fujian 352100 (CN); ZHENG, Yulian, Ningde, Fujian 352100 (CN)
(74) Representative: Ran, Handong
(86) International application number: PCT/CN2023/130711
(87) International publication number: WO 2025/097370

(57) **Abstract**

A battery cell (100), a battery (1000) and an electric device. The battery cell (100) comprises: an electrode assembly (20), which comprises at least one positive electrode sheet (21) and at least one negative electrode sheet (22); and a casing (10), which is configured to accommodate the electrode assembly (20), and comprises a first wall portion (11), wherein the first wall portion (11) is provided with a pressure relief portion (40), the pressure relief portion (40) being provided with an indented groove (41), and the pressure relief portion (40) being configured to crack along at least part of the indented groove (41) when the battery cell (100) is subjected to pressure relief; and the thickness dimension of the first wall portion (11) is E1, which satisfies 0.4 mm≤E1≤2 mm.

## Description

### TECHNICAL FIELD

The present application relates to the technical field of batteries, and in particular, to a battery cell, a battery, and an electric device.

### BACKGROUND

Energy conservation and emission reduction are the key to sustainable development of the automobile industry. Electric vehicles have become an important part of the sustainable development of the automobile industry due to their energy-saving and environmental protection advantages. For electric vehicles, the battery technology is an important factor in their development.

In order to ensure the safety performance of the battery cell, a pressure relief part is generally disposed on the battery cell. The pressure relief part is configured to release the pressure inside the battery cell when the battery cell satisfies a predetermined condition. During use of the battery cell in charging and discharging, the electrode assembly may undergo expansion and deformation, causing the housing accommodating the electrode assembly to bulge and deform as well. As a result, the pressure relief part disposed on the housing is prone to rupture, and the reliability of the battery cell is reduced.

### SUMMARY

In view of the above problems, the present application provides a battery cell, a battery, and an electric device, which can alleviate the problem of rupture at the pressure relief part during use of the battery.

In a first aspect, the present application provides a battery cell. The battery cell includes: an electrode assembly, including at least one positive electrode plate and at least one negative electrode plate; and a housing, configured to accommodate the electrode assembly, where the housing includes a first wall part, the first wall part is provided with a pressure relief part, the pressure relief part is provided with a score groove, the pressure relief part is configured to rupture along at least a portion of the score groove when the battery cell is subjected to pressure relief, and a thickness dimension of the first wall part is E1, satisfying 0.4 mm ≤ E1 ≤ 2 mm.

In the technical solutions of the embodiments of the present application, by limiting the thickness dimension of the first wall part, the transitional decrease in the volumetric energy density of the battery cell can be prevented, and the probability of liquid leakage due to rupture at the pressure relief part can be reduced, thereby improving the reliability of the battery cell.

In some embodiments, the at least one positive electrode plate and the at least one negative electrode plate are stacked to form a straight zone, at least a portion of the positive electrode plate and at least a portion of the negative electrode plate are disposed in a stacked manner in the straight zone in a first direction, the first wall part is of a rectangular structure, the first wall part is located on one side of the electrode assembly in a second direction, the second direction is parallel to a thickness direction of the first wall part and is perpendicular to the first direction, a dimension of the straight zone in a third direction is B1, and the third direction is perpendicular to the first direction and the second direction, separately, where 150 mm ≤ B1 ≤ 600 mm, and preferably, 220 mm ≤ B ≤ 530 mm. In the above technical solutions, on the basis of increasing the energy of the battery cell, the probability of liquid leakage due to rupture at the pressure relief part can be reduced, thereby improving the reliability of the battery cell.

In some embodiments, the at least one positive electrode plate and the at least one negative electrode plate are stacked to form a straight zone, at least a portion of the positive electrode plate and at least a portion of the negative electrode plate are disposed in a stacked manner in the straight zone in a first direction, the first wall part is of a rectangular structure, the first wall part is located on one side of the electrode assembly in a second direction, the second direction is parallel to a thickness direction of the first wall part and is perpendicular to the first direction, a dimension of the straight zone in a third direction is B, and the third direction is perpendicular to the first direction and the second direction, separately, where 0.006 ≤ E1/B ≤ 0.0135. In the above technical solutions, the decrease in the volumetric energy density of the battery cell is avoided to some extent. At the same time, the tension for the first wall part can be reduced, and the probability of tension-induced rupture at the weakened zone on the pressure relief part can be reduced, thereby reducing the probability of liquid leakage at the pressure relief part, and improving the reliability of the battery cell.

In some embodiments, the at least one positive electrode plate and the at least one negative electrode plate are stacked to form the straight zone, and the at least a portion of the positive electrode plate and the at least a portion of the negative electrode plate are disposed in a stacked manner in the straight zone in the first direction; the housing further includes two second wall parts connected to the first wall part, the two second wall parts are located on both sides of the electrode assembly in the first direction, respectively, the first wall part is located on one side of the electrode assembly in the second direction, and the second direction is the thickness direction of the first wall part and is perpendicular to the first direction. In the above technical solutions, when the electrode assembly expands, the first wall part is less affected by the electrode assembly than the second wall part. Since the pressure relief part is located at the first wall part, the risk of obstruction or rupture at the pressure relief part due to the expansion of the electrode assembly can be reduced.

In some embodiments, the area of an orthographic projection of the first wall part in the second direction is less than the area of an orthographic projection of the second wall part in the first direction. In the above technical solutions, the first wall part may correspond to the end surface of the electrode assembly, or the first wall part may correspond to the small surface of the electrode assembly, and the second wall part may correspond to the large surface of the electrode assembly. In addition, the area of the orthographic projection of the second wall part in the first direction may be greater than the area of the large surface of the electrode assembly. When the electrode assembly expands, the expansion and deformation have a great impact on the second wall part, and the first wall part is less affected by the expansion of the electrode assembly than the second wall part is, such that the degree of deformation of the first wall part provided with the pressure relief part is small, thereby reducing the risk of rupture at the pressure relief part, and improving the reliability of the battery cell.

In some embodiments, the thickness dimension of the first wall part in the second direction is E1, and the thickness dimension of the second wall part in the first direction is D1, where E1 > D1. In the above technical solutions, in one aspect, it is beneficial to improving the strength of the first wall part and reducing the risk of rupture at the pressure relief part; in another aspect, the housing may be manufactured by stamping using a mold, the thickness of the first wall part is greater than the thickness of the second wall part, and the housing may be manufactured by stamping a plate with the same thickness as that of the first wall part, thereby reducing the difficulty in manufacturing the housing.

In some embodiments, the pressure relief part is provided with a predetermined pressure relief zone and the score groove, and the predetermined pressure relief zone is provided with a predetermined opening boundary, where the predetermined opening boundary is enclosed by the outer edge of an orthographic projection of the at least a portion of the score groove in the second direction; or the predetermined opening boundary is enclosed by connecting lines between a plurality of end parts of the score groove; or the predetermined opening boundary is enclosed by both the connecting lines between the plurality of end parts of the score groove and the outer edge of the orthographic projection of the at least a portion of the score groove in the second direction. In the above technical solutions, by adopting the score groove of the above structure, it is beneficial to rapid pressure relief of the pressure relief part.

In some embodiments, the area of the orthographic projection of the predetermined pressure relief zone is S1, and the area enclosed by the edge of the orthographic projection of the first wall part is S2, where 0.06 ≤ S1/S2 ≤ 0.30. In the above technical solutions, the area of the predetermined pressure relief zone can be increased, thereby satisfying the gas discharge requirement, and improving the timeliness of burst of the pressure relief part. Moreover, the tension for the pressure relief part is reduced, and the probability of tension-induced rupture at the weakened zone of the pressure relief part is reduced, thereby reducing the probability of liquid leakage at the pressure relief part, and improving the reliability of the battery cell.

In some embodiments, the first wall part is of a rectangular structure, the width direction of the first wall part is parallel to the first direction, the length direction of the first wall part is parallel to a third direction, and the third direction is perpendicular to the first direction and the second direction, separately; the maximum width dimension of the predetermined pressure relief zone in the width direction is W1, and the maximum length dimension of the predetermined pressure relief zone in the length direction is W2, where W2 > W1. In the above technical solutions, the length of the predetermined pressure relief zone is increased as much as possible, thereby increasing the pressure relief area of the predetermined pressure relief zone, and satisfying the gas discharge requirement. At the same time, the width of the predetermined pressure relief zone is reduced as much as possible, thereby increasing the distance between the edge of the predetermined pressure relief zone and the edge of the second wall part, reducing the tensile force on the weakened zone of the pressure relief part, and reducing the probability of liquid leakage caused by rupture at the pressure relief part. Certainly, in the case that the service life of the battery cell is ensured, the width and the length of the predetermined pressure relief zone may be increased to provide a larger gas discharge area, thereby improving the pressure relief effect.

In some embodiments, the following condition is satisfied: 0.25 ≤ W1/W2 ≤ 0.7. In the above technical solutions, in the predetermined pressure relief zone, gas discharge is enabled to be smooth and efficient. At the same time, the distance between the edge of the preset pressure relief zone and the edge of the first wall part can be increased, thereby reducing the force on the preset pressure relief zone, and reducing the probability of liquid leakage caused by rupture at the pressure relief part. Certainly, in the case that the service life of the battery cell is ensured, the width and the length of the predetermined pressure relief zone may be increased to provide a larger gas discharge area, thereby improving the pressure relief effect.

In some embodiments, the pressure relief part is integrally formed with the first wall part. In the above technical solutions, by integrally forming the pressure relief part with the first wall part, the reliability of the pressure relief part can be improved, the process of connecting the pressure relief part to the first wall part is omitted, and thus the production and manufacturing costs of the battery cell can be reduced.

In some embodiments, the pressure relief part is disposed separately from the first wall part, the first wall part is provided with a through hole, and the pressure relief part is mounted in the through hole. In the above technical solutions, the pressure relief part is a component independent of the housing, and the pressure relief part and the housing can be manufactured separately and then assembled. This features low generation difficulty and high efficiency.

In some embodiments, the housing includes a housing body and an end cover, where one side of the housing body is provided with an opening, and the end cover is connected to the housing body and configured to close the opening, and the first wall part is formed on the housing body. In the above technical solutions, by disposing the pressure relief part on the housing body, the structure of the end cover can be simplified, and at the same time, this enables the distance between the pressure relief part and the main body part of the electrode assembly to be shortened, thereby shortening the path for the discharge medium to flow to the pressure relief part during pressure relief, shortening the time for the discharge medium to reach the pressure relief part, improving the timeliness of pressure relief of the battery cell, and thereby effectively improving the reliability of the battery cell.

In some embodiments, two opposite sides of the housing body are each provided with an opening, and two end covers are configured to close the openings on corresponding sides. By providing two openings on the housing body, the manufacturing and formation of the housing body can be facilitated, and it is also convenient for the electrode assembly to lead out tabs from both ends, thereby facilitating the separation of the two electrical connection parts and reducing the risk of short circuits of the battery cell.

In some embodiments, the end cover is provided with an electrical connection part, the electrical connection part being electrically connected to the positive electrode plate, or the electrical connection part being electrically connected to the negative electrode plate. In the above technical solutions, electric energy of the battery cell is input or output.

In some embodiments, the first wall part is configured to support the electrode assembly and located under the electrode assembly. In the above technical solutions, the pressure relief part may be disposed at the bottom of the battery cell. The bottom of the battery cell may be provided with an exhaust channel, and the exhaust channel may be in communication with the pressure relief part, so as to discharge the high-temperature and high-pressure smoke into the exhaust channel through the pressure relief part at the bottom when the battery cell is subjected to thermal runaway, thereby discharging the smoke to the outside.

In some embodiments, the material of the housing body includes at least one of aluminum, nickel-plated carbon steel, stainless steel, a magnesium alloy, a nickel alloy, a copper alloy, and a zirconium alloy. In the above technical solutions, by using the materials described above, the tensile strength of the housing body can be increased, thereby reducing the deformation of the housing body when the electrode assembly expands, reducing the probability of tension-induced rupture at the housing body or the pressure relief part, reducing the risk of liquid leakage, and improving the reliability of the battery cell.

In some embodiments, the positive electrode plate includes a positive electrode current collector and a positive electrode active substance zone disposed on the surface of the positive electrode current collector. The constituent material of the positive electrode current collector includes an aluminum element with a mass percentage greater than or equal to 50%. In the above technical solutions, compared with using a composite current collector in the prior art, the use of the positive electrode current collector described above can reduce the difficulty in manufacturing the positive electrode plate and reduce the manufacturing cost as well.

In a second aspect, the present application provides a battery, which includes the battery cell according to the above embodiments.

In a third aspect, the present application provides an electric device, which includes the battery according to the above embodiments, and the battery is configured to provide electric energy.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the scope of the present application. Furthermore, the same reference numerals in all the drawings denote identical components. In the drawings:
FIG. 1 is a schematic diagram of an electric device in the related art;
FIG. 2 is a schematic diagram of a battery in the related art;
FIG. 3 is a schematic diagram of a battery cell according to some embodiments of the present application;
FIG. 4 is an exploded view of a battery cell according to some embodiments of the present application;
FIG. 5 is a schematic diagram of an electrode assembly according to some embodiments of the present application;
FIG. 6 is a schematic diagram of an electrode assembly according to some other embodiments of the present application;
FIG. 7 is a top view of a battery cell according to some embodiments of the present application;
FIG. 8 is a cross-sectional view along line A-A in FIG. 7;
FIG. 9 is an enlarged view of the circled B in FIG. 8 according to some embodiments of the present application;
FIG. 10 is an enlarged view of the circled B in FIG. 8 according to some other embodiments of the present application;
FIG. 11 is a schematic diagram of a first wall part according to some embodiments of the present application;
FIG. 12 is a schematic diagram of a pressure relief part according to some embodiments of the present application;
FIG. 13 is a schematic diagram of a pressure relief part according to some other embodiments of the present application;
FIG. 14 is a schematic diagram of a pressure relief part according to still some other embodiments of the present application;
FIG. 15 is a schematic diagram of mounting of a pressure relief part according to some embodiments of the present application;
FIG. 16 is a cross-sectional view along line C-C in FIG. 15 according to some embodiments;
FIG. 17 is a cross-sectional view along line C-C in FIG. 15 according to some other embodiments;
FIG. 18 is a schematic diagram of a battery cell according to some other embodiments of the present application; and
FIG. 19 is a schematic diagram of a battery cell according to still some other embodiments of the present application.

### Reference numerals:

battery 1000, vehicle 2000, case 200, first portion 201, first portion 202,
battery cell 100,
housing 10, housing body 101, end cover 102, first wall part 11, first outer surface 111, first inner surface 112, groove 113, second wall part 12, second outer surface 121, second inner surface 122, third wall part 13, fourth wall part 14, fifth wall part 15,
electrode assembly 20, positive electrode plate 21, negative electrode plate 22, straight zone 23, bending zone 24,
electrical connection part 30,
pressure relief part 40, predetermined pressure relief zone 401, score groove 41, first circular arc segment 411, first straight line segment 412, second straight line segment 413, third straight line segment 414, arc-shaped segment 415, fourth straight line segment 416, fifth straight line segment 417, sixth straight line segment 418, seventh straight line segment 419 (hinge score 419),
patch 60,
first direction F1, second direction F2, third direction F3.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is obvious that the described embodiments are some, but not all, embodiments of the present application. Based on the embodiments in the present application, all other embodiments obtained by those of ordinary skill in the art without creative work shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the present application, the term "and/or" is only an association relationship that describes the associated objects, and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not impose any limitation on the present application.

The term "plurality of" used in the present application refers to no less than two (including two).

In the embodiments of the present application, the battery cell may be a secondary battery. The secondary battery refers to a battery cell that can be reused by activating the active material through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like. This is not limited in the embodiments of the present application.

The battery described in the embodiments of the present application refers to a single physical module that may include one or more battery cells to provide a higher voltage and capacity. When there are a plurality of battery cells, the plurality of battery cells are connected in series, in parallel, or in series-parallel by a busbar component.

In some embodiments, the battery may be a battery module, and when there are a plurality of battery cells, the plurality of battery cells are disposed and fixed to form one battery module.

In some embodiments, the battery may be a battery pack. The battery pack includes a case and a battery cell, and the battery cell or the battery module is accommodated in the case.

In some embodiments, the case may be a portion of the chassis structure of the vehicle. For example, a portion of the case may become at least a portion of the floor of the vehicle, or a portion of the case may become at least a portion of a crossmember and a longitudinal member of the vehicle.

In some embodiments, the battery may be an energy storage device. The energy storage device includes an energy storage container, an energy storage electric cabinet, and the like.

Battery technology advancement requires consideration of various design factors at the same time, such as energy density, cycle life, discharge capacity, charging and discharging rate, and other performance parameters. In addition, the safety of the battery also needs to be considered.

In the battery cell, in order to ensure the safety of the battery cell, a pressure relief part may be disposed on the housing of the battery cell. When the battery cell is subjected to thermal runaway, the pressure inside the battery cell is released through the pressure relief part, so as to improve the safety of the battery cell.

During use of the battery cell in charging and discharging, the electrode assembly may expand, causing the housing to bulge and deform. The pressure relief part is disposed on the housing, and especially, some pressure relief parts are disposed on the wall part on the side proximal to the electrode assembly. The expansion of the electrode assembly may deform the wall part where the pressure relief part is located, thereby exerting a tensile force on the score of the pressure relief part, resulting in liquid leakage and the like caused by rupture at the score of the pressure relief part. As a result, the rupture of the pressure relief part may occur when the pressure inside the battery cell has not reached the rupture pressure of the pressure relief part, leading to failure of the pressure relief part and reduced reliability of the pressure relief part.

In view of this, the embodiments of the present application provide a battery cell. The battery cell includes: an electrode assembly and a housing. The electrode assembly includes at least one positive electrode plate and at least one negative electrode plate. The housing is configured to accommodate the electrode assembly and includes a first wall part. The first wall part is provided with a pressure relief part. The pressure relief part is provided with a score groove. The pressure relief part is configured to rupture along at least a portion of the score groove when the battery cell is subjected to pressure relief. The thickness dimension of the first wall part is E1, satisfying 0.4 mm ≤ E1 ≤ 2 mm.

In such a battery cell, by limiting the thickness dimension of the first wall part, the transitional decrease in the volumetric energy density of the battery cell can be prevented, and the probability of liquid leakage due to rupture at the pressure relief part can be reduced, thereby improving the reliability of the battery cell.

The technical solutions described in the embodiments of the present application are suitable for batteries and electric devices using batteries.

The electric device may be a vehicle, a mobile phone, a portable device, a laptop computer, a ship, a spacecraft, an electric toy, an electric tool, or the like. The vehicle may be a petrol or diesel vehicle, a natural gas vehicle, or a new energy vehicle, and the new energy vehicle may be a pure electric vehicle, a hybrid electric vehicle, an extended-range vehicle, or the like; the spacecraft includes an airplane, a rocket, a space shuttle, a spaceship, and the like; the electric toy includes a stationary or mobile electric toy, such as a game console, an electric car toy, an electric ship toy, and an electric airplane toy; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer. The electric devices described above are not specially limited in the embodiments of the present application.

For ease of explanation, the following embodiments will be described by taking a vehicle as an example of the electric device.

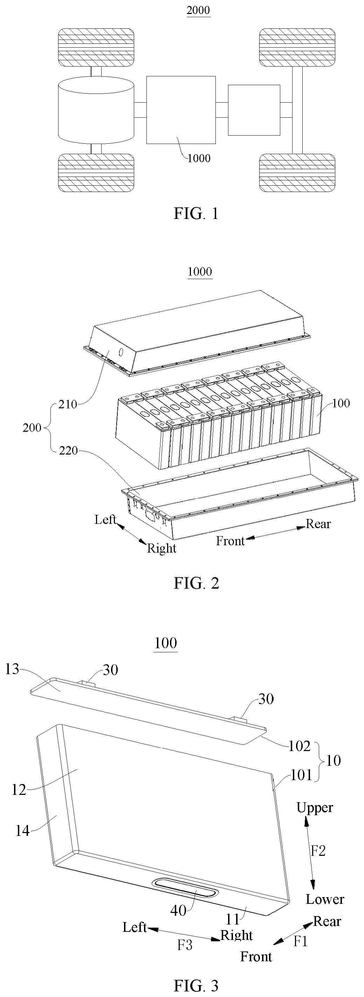

Referring to FIG. 1, FIG. 1 is a structural schematic diagram of a vehicle 2000 according to some embodiments of the present application. A battery 1000 is disposed inside the vehicle 2000, and the battery 1000 may be disposed at the bottom, head, or tail of the vehicle 2000. The battery 1000 may be configured to power the vehicle 2000. For example, the battery 1000 may serve as an operation power source of the vehicle 2000.

The vehicle 2000 may further include a controller and a motor. The controller is configured to control the battery 1000 to supply power to the motor, e.g., for operation power needed for starting, navigating, and driving of the vehicle 2000.

In some embodiments of the present application, the battery 1000 may not only serve as an operation power source for the vehicle 2000, but also as a driving power source for the vehicle 2000 to, instead of or in part instead of fuel or natural gas, provide driving power for the vehicle 2000.

Referring to FIG. 2, FIG. 2 is an exploded view of a battery 1000 according to some embodiments of the present application. The battery 1000 includes battery cells 100 and a case 200, and the case 200 is configured to accommodate the battery cells 100.

The case 200 is a component for accommodating the battery cells 100, the case 200 provides a placement space for the battery cells 100, and the case 200 may be of various structures. In some embodiments, the case 200 may include a first portion 201 and a second portion 202. The first portion 201 and the second portion 202 are mutually lidded with each other to define a placement space for accommodating the battery cells 100. The first portion 201 and the second portion 202 may be in various shapes, such as a cylindrical shape and a rectangular parallelepiped shape. The first portion 201 may be a hollow structure with one side open, the second portion 202 may also be a hollow structure with one side open, and the open side of the first portion 201 is lidded with the open side of the second portion 202 to form a case 200 having a placement space. Alternatively, the first portion 201 is a hollow structure with one side open, the second portion 202 is of a plate-like structure, and the open side of the first portion 201 is lidded with the second portion 202 to form a case 200 having a placement space. As an example, the battery cell 100 may be a cylindrical battery cell, a prismatic battery cell, a pouch battery cell, or a battery cell 100 of other shapes. The prismatic battery cell includes a square-housing battery cell, a blade-shaped battery cell, and a multi-prismatic battery, and the multi-prismatic battery is, e.g., a hexagonal prismatic battery. This is not particularly limited in the present application.

In the battery 1000, one or more battery cells 100 may be provided. If a plurality of battery cells 100 are provided, the plurality of battery cells 100 may be connected in series, in parallel, or in series-parallel. The series-parallel connection means that both series connection and parallel connection are present in the connection of the plurality of battery cells 100. Alternatively, the plurality of battery cells 100 may be first connected in series, in parallel, or in series-parallel to form battery modules, and then the plurality of battery modules are connected in series, in parallel, or in series-parallel to form a whole to be accommodated in the case 200. Alternatively, all the battery cells 100 may be directly connected in series, in parallel, or in series-parallel, and then the whole formed by all the battery cells 100 is accommodated in the case 200.

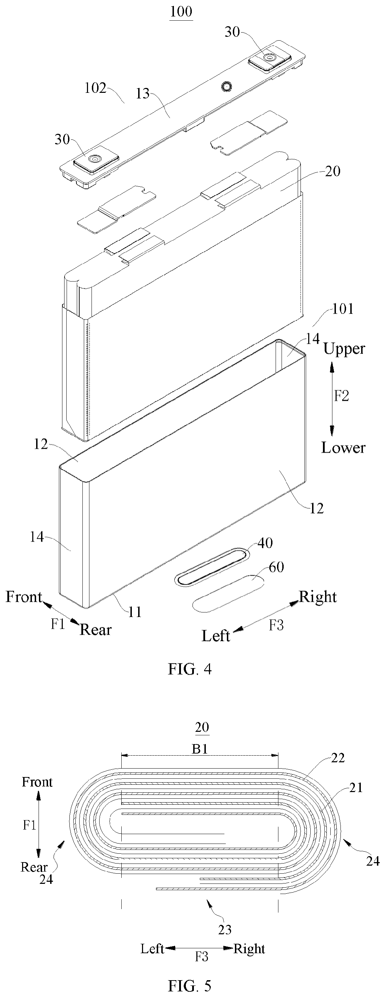

Referring to FIGs. 3 and 4, FIG. 3 is a schematic diagram of a battery cell 100 according to some embodiments of the present application, and FIG. 4 is an exploded view of a battery cell 100 according to some embodiments of the present application. The battery cell 10 may include a housing 10 and an electrode assembly 20.

The housing 10 is configured to accommodate components such as an electrode assembly 20 and an electrolyte. The housing 10 may be a steel housing, an aluminum housing, a plastic housing (such as polypropylene), a composite metal housing (such as a copper-aluminum composite housing), an aluminum-plastic film, or the like. As an example, the housing 10 may include a housing body 101 and an end cover 102.

The housing body 101 may be a hollow structure with an opening formed at one end, or the housing body 101 may be a hollow structure with openings formed at two opposite ends. The housing body 101 may be made of various materials, such as copper, iron, aluminum, steel, and aluminum alloy.

The end cover 102 is a component that closes the opening of housing body 101 to isolate the internal environment of the battery cell 100 from the external environment. The end cover 102 and the housing body 101 together define an accommodating space for accommodating the electrode assembly 20, the electrolyte, and other components. The end cover 102 may be connected to the housing body 101 by welding or winding, to close the opening of the housing body 101. The shape of the end cover 102 may be adapted to the shape of the housing 10. For example, the housing body 101 is a rectangular parallelepiped structure, and the end cover 102 is a rectangular plate-shaped structure adapted to the housing 10. The end cover 102 may also be made of various materials, such as copper, iron, aluminum, steel, and aluminum alloy.

In the battery cell 10, one or two end covers 102 may be provided. In an embodiment in which the housing body 101 is a hollow structure with openings formed at two ends, two end covers 102 may be correspondingly disposed. The two end covers 102 respectively close the two openings of the housing body 101, and the two end covers 102 and the housing body 101 jointly define the accommodating space. In an embodiment in which the housing body 101 is a hollow structure with an opening formed at one end, one end cover 102 may be correspondingly disposed. The end cover 102 closes the opening at one end of the housing body 101, and the one end cover 102 and the housing body 101 jointly define the accommodating space.

The electrode assembly 20 includes a positive electrode, a negative electrode, and a separator. During the charging and discharging process of the battery cell 100, active ions (such as lithium ions) are intercalated and deintercalated back and forth between the positive electrode and the negative electrode. The separator is disposed between the positive electrode and the negative electrode to prevent the positive and negative electrodes from short-circuiting while allowing the passage of active ions.

In some embodiments, the positive electrode may be a positive electrode plate 21, and the positive electrode plate 22 may include a positive electrode current collector and a positive electrode active material disposed on at least one surface of the positive electrode current collector.

As an example, the positive electrode current collector is provided with two surfaces opposite to each other in its own thickness direction, and the positive electrode active material is disposed on any one or both of the two opposite surfaces of the positive electrode current collector.

In some embodiments, the negative electrode may be a negative electrode plate 22, and the negative electrode plate 22 may include a negative electrode current collector and a negative electrode active material disposed on at least one surface of the negative electrode current collector.

As an example, the negative electrode current collector is provided with two surfaces opposite to each other in its own thickness direction, and the negative electrode active material is disposed on any one or both of the two opposite surfaces of the negative electrode current collector.

In some embodiments, the material of the positive electrode current collector may be aluminum, and the material of the negative electrode current collector may be copper.

In some embodiments, the electrode assembly 20 further includes a separator disposed between the positive electrode and the negative electrode.

In some embodiments, the separator is a separation film. The present application does not particularly limit the type of the separation film, and any porous-structure separation film known to have good chemical stability and mechanical stability may be selected and used.

In some embodiments, the separator is a solid-state electrolyte. The solid-state electrolyte is disposed between the positive electrode and the negative electrode, serving both to transport ions and to isolate the positive electrode and the negative electrode.

In some embodiments, the battery cell 100 further includes an electrolyte that serves to conduct ions between the positive electrode and the negative electrode. The present application has no specific restrictions on the type of the electrolyte, which can be selected according to needs. The electrolyte may be liquid, gel, or solid.

In some embodiments, the electrode assembly 20 is of a wound structure. The positive electrode plate and the negative electrode plate are wound to form a wound structure.

In some embodiments, the electrode assembly 20 is of a stacked structure.

As an example, a plurality of positive electrode plates 21 and a plurality of negative electrode plates 22 may be disposed respectively, and the plurality of positive electrode plates 21 and the plurality of negative electrode plates 22 are alternately disposed in a stacked manner.

As an example, a plurality of positive electrode plates 21 may be disposed, and the negative electrode plate 22 is folded to form a plurality of folded segments disposed in a stacked manner, with one positive electrode plate disposed between adjacent folded segments.

As an example, the positive electrode plate 21 and the negative electrode plate 22 are both folded to form a plurality of folded segments disposed in a stacked manner.

As an example, there may be a plurality of separators, and each separator is disposed between any adjacent positive electrode plates or negative electrode plates separately.

As an example, the separators may be disposed continuously between any adjacent positive electrode plates or negative electrode plates by folding or winding.

In some embodiments, the shape of the electrode assembly 20 may be flat, multi-prismatic, or the like.

In some embodiments, the electrode assembly 20 is provided with tabs that can conduct current out from the electrode assembly 20. The tab includes a positive electrode tab and a negative electrode tab.

The battery cell 100 may further include an electrical connection part. The electrical connection part may be disposed on the housing 10, and is configured to be electrically connected with the tab of the electrode assembly 20 to output the electric energy of the battery cell 10. The electrical connection part may be directly connected to the tab. For example, the electrical connection part is directly welded to the tab. Alternatively, the electrical connection part may be indirectly connected with the tab. For example, the electrical connection part is indirectly connected with the tab via a current collecting member. The current collecting member may be a metal conductor, such as copper, iron, aluminum, steel, or an aluminum alloy.

As shown in FIGs. 3 and 4, taking an example in which the housing body 101 is a hollow structure with an opening formed at one end, two electrical connection parts may be disposed on the end cover 102. The two electrical connection parts are a positive electrical connection part and a negative electrical connection part respectively. The positive electrical connection part is electrically connected with the positive electrode tab, and the negative electrical connection part is electrically connected with the negative electrode tab.

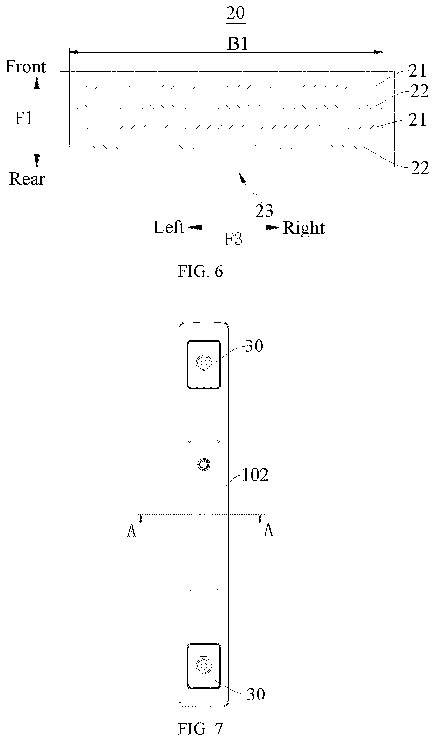

Referring to FIGs. 5 and 6, FIG. 5 is a schematic diagram of an electrode assembly 20 according to some embodiments of the present application; and FIG. 6 is a schematic diagram of an electrode assembly 20 according to some other embodiments of the present application. The electrode assembly 20 includes a positive electrode plate 21 and a negative electrode plate 22. The positive electrode plate 21 includes a positive electrode main body and a positive electrode tab. The positive electrode tab is led out from one end of the positive electrode main body, most areas of the positive electrode tab are not coated with the positive electrode active material, and most areas of the positive electrode main body are coated with the positive electrode active material. The negative electrode plate 22 includes a negative electrode main body and a negative electrode tab. The negative electrode tab is led out from one end of the negative electrode main body, most areas of the negative electrode tab are not coated with the negative electrode active material, and most areas of the negative electrode main body are coated with the negative electrode active material. The positive electrode main body and the negative electrode main body together constitute a main body part of the electrode assembly.

As shown in FIG. 5, the electrode assembly 20 includes a plurality of electrode plates disposed in a wound manner, and the electrode assembly 20 includes a straight zone 23 and a bending zone 24 connected to an end part of the straight zone 23.

The plurality of electrode plates are disposed in a wound manner, that is, the positive electrode plate 21 and the negative electrode plate 22 are disposed in a stacked manner and then wound around a set axis to form the electrode assembly 20. The straight zone 23 is a portion of the electrode plate that extends along a plane after being wound. The bending zone 24 is a portion of the electrode plate that extends along an arc-shaped surface after being wound. For example, as shown in FIG. 5, a portion of the electrode assembly 20 between a front-side surface and a rear-side surface is formed as the straight zone 23. The extension direction of the electrode plates in the straight zone 23 is the length direction of the straight zone 23. As shown in FIG. 5, the length dimension of the straight zone 23 in a left-right direction is B1, and the left and right end parts of the straight zone 23 are the bending zones 24.

As shown in FIG. 6, the electrode assembly 120 includes a plurality of electrode plates disposed in a stacked manner, and the electrode assembly 20 is provided with a straight zone 23.

The plurality of electrode plates are disposed in a stacked manner, for example, at least one positive electrode plate 21 and at least one negative electrode plate 22 are disposed in a stacking manner to form the electrode assembly 20. The straight zone 23 is formed by stacking at least a portion of the positive electrode plate 21 and the negative electrode plate 22, or by stacking the at least a portion of the positive electrode plate 21 and the negative electrode plate 22. The extension direction of the electrode plates in the straight zone 23 is the length direction of the straight zone 23. As shown in FIG. 6, the length dimension of the straight zone 23 in the left-right direction is B1.

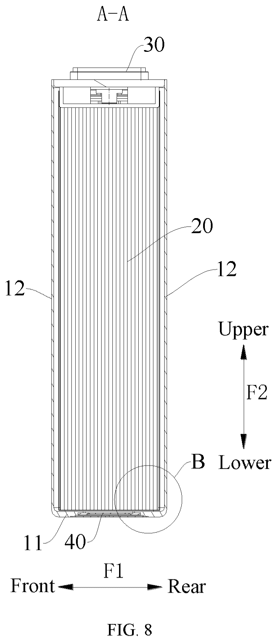

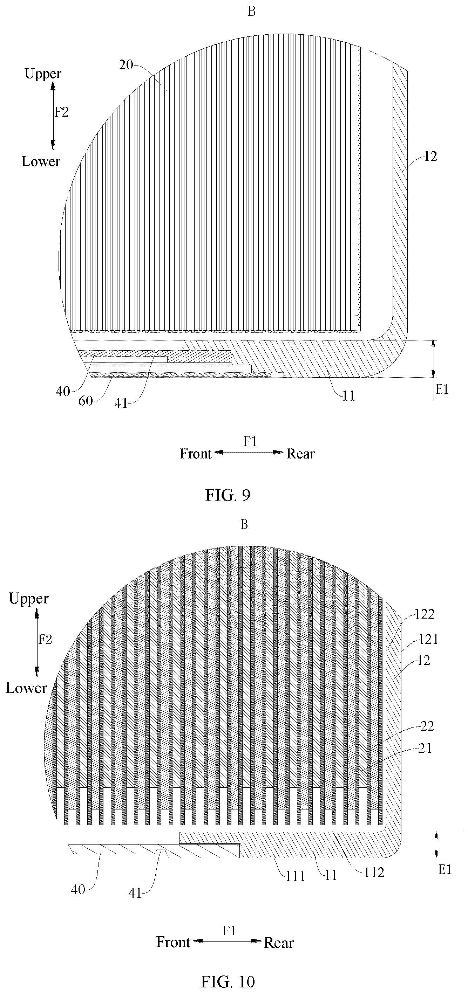

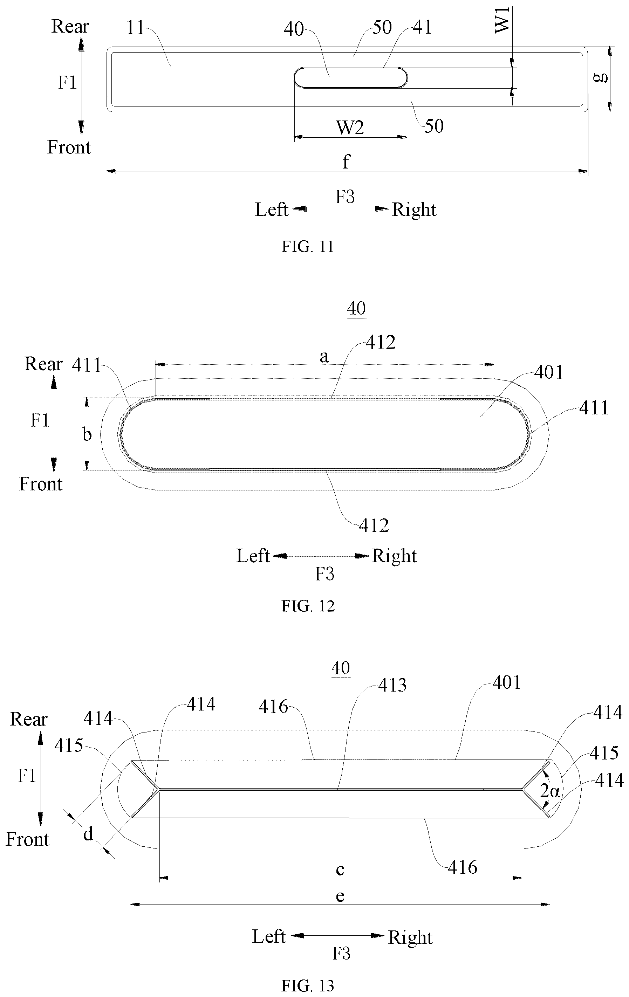

Referring to FIGs. 7 to 11, FIG. 7 is a top view of a battery cell 100 according to some embodiments of the present application; FIG. 8 is a cross-sectional view of the battery cell 100 shown in FIG. 7 along line A-A; FIG. 9 is an enlarged view of the circled B in FIG. 8 according to some embodiments of the present application; FIG. 10 is an enlarged view of the circled B in FIG. 8 according to some other embodiments of the present application; and FIG. 11 is a schematic diagram of a first wall part according to some embodiments of the present application. A battery cell 100 according to the embodiments of the present application includes an electrode assembly 20 and a housing 10.

The electrode assembly 20 includes at least one positive electrode plate 21 and at least one negative electrode plate 22. The housing 10 is configured to accommodate the electrode assembly 20. The housing 10 includes a first wall part 11. The first wall part 11 is provided with a pressure relief part 40. The pressure relief part 40 is provided with a score groove 41. The pressure relief part 40 is configured to rupture along at least a portion of the score groove 41 when the battery cell 100 is subjected to pressure relief. The thickness dimension of the first wall part 11 is E1, satisfying 0.4 mm ≤ E1 ≤ 2 mm.

The housing 10 refers to a structural member on the outermost side of the battery cell 100, and the housing 10 accommodates the electrode assembly 20, the electrolyte, and the like.

The electrode assembly 20 is disposed in the housing 10. One electrode assembly 20 or a plurality of electrode assemblies 20 may be disposed in the housing 10. Each electrode assembly 20 includes at least one positive electrode plate 21 and at least one negative electrode plate 22.

The pressure relief part 40 is disposed on the housing 10. The pressure relief part 40 is a component configured to release the internal pressure of the battery cell 100, and may be configured to discharge a discharge medium inside the battery cell 100 through the pressure relief part 40 when the internal pressure of the battery cell 100 reaches a threshold, so as to achieve the purpose of pressure relief. The design of the threshold varies based on the design requirements, and the threshold may depend on the material of one or more of the positive electrode plate 21, the negative electrode plate 22, the electrolyte, and the separator in the battery cell 100.

The thickness dimension of the first wall part 11 is E1, and the thickness of the first wall part 11 here is the distance between the inner and outer side surfaces of the first wall part 11 in an upper-lower direction.

The first wall part 11 may be formed into a flat-plate structure, in which case the thickness of the first wall part 11 is uniform at different positions. Alternatively, the first wall part 11 may include a main body zone and a partial zone. The partial zone may be provided with a groove, a protrusion, or other special structures such as a hole. The partial zone may be located around the main body zone, or may be located in the middle of the main body zone, or may be disposed in a dispersed manner. In this case, the thickness dimension of the first wall part 11 is the thickness dimension of the main body zone.

As shown in FIGs. 9 and 10, if the thickness dimension of the first wall part 11 is excessively large, the dimension of the housing 10 occupies too much space of the entire battery cell 100, such that correspondingly, the space occupied by the electrode assembly 20 is reduced, thereby causing a decrease in the volumetric energy density of the battery cell 100. If the thickness dimension of the first wall part 11 is excessively small, the first wall part 11 is excessively thin, and the first wall part 11 is prone to tensile deformation when the electrode assembly 20 expands. As a result, the weakened zone on the pressure relief part 40 is prone to tension-induced rupture, thereby resulting in liquid leakage and the like at the pressure relief part 40.

Thus, E1 may be any one point value of 0.4 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, 1.6 mm, 1.7 mm, 1.8 mm, 1.9 mm, and 2 mm, or a value in a range defined by any two of the point values.

In the technical solutions of the embodiments of the present application, by limiting the thickness dimension of the first wall part 11, the transitional decrease in the volumetric energy density of the battery cell 100 can be prevented, and the probability of liquid leakage due to rupture at the pressure relief part 40 can be reduced, thereby improving the reliability of the battery cell 100.

As shown in FIGs. 9 and 10, in some embodiments, at least one positive electrode plate 21 and at least one negative electrode plate 22 are stacked to form a straight zone 23, and at least a portion of the positive electrode plate 21 and at least a portion of the negative electrode plate 22 are stacked in the straight zone 23 in a first direction F1.

The electrode assembly 20 may be of a stacking type, that is, a plurality of electrode plates of the electrode assembly 20 are disposed in a stacking manner, and the stacked electrode plates form a straight zone 23. In the straight zone 23, the positive electrode plate 21 and at least a portion of the negative electrode plate 22 are disposed in a stacked manner in the first direction F1, or at least a portion of the positive electrode plate 21 and the negative electrode plate 22 are disposed in a stacked manner in the first direction F1. As such, the expansion and deformation of the electrode assembly 20 are particularly obvious in the first direction F1.

The electrode assembly 20 may also be of a wound type. The positive electrode plate 21 and the negative electrode plate 22 of the electrode assembly 20 are superposed with the separator and then are wound and formed such that a straight zone 23 is formed. In the straight zone 23, a portion of the positive electrode plate 21 and a portion of the negative electrode plate 22 are disposed in a stacked manner in the first direction F1. For example, after being wound and formed, each layer of the positive electrode plate 21 and each layer of the negative electrode plate 22 may be penetrated by an axis extending in the first direction F1, such that the expansion and deformation of the electrode assembly 20 are particularly obvious in the first direction F1.

The first wall part 11 is of a rectangular structure. The first wall part 11 is located on one side of the electrode assembly 20 in a second direction F2. The second direction F2 is parallel to the thickness direction of the first wall part 11 and is perpendicular to the first direction F1. The dimension of the straight zone 23 in a third direction F3 is B1, and the third direction F3 is perpendicular to the first direction F1 and the second direction F2, separately.

In some embodiments, 150 mm ≤ B1 ≤ 600 mm.

As shown in FIGs. 5 to 6, the third direction F3 is a left-right direction. In the left-right direction, if B1 is excessively small, the dimension of the straight zone 23 in the third direction F3 is small, and the overall dimension of the electrode assembly 20 in the third direction F3 is small, which may cause a decrease in the energy of the battery cell 100, relatively. If B1 is excessively large, the dimension of the straight zone 23 in the third direction F3 is large, and the overall dimension of the electrode assembly 20 in the third direction F3 is large, the degree of expansion of the electrode assembly 20 is large, which in turn causes an increase in the tensile force for the surface where the pressure relief part 40 is located. As a result, the weakened zone on the pressure relief part 40 is prone to tension-induced rupture, thereby resulting in liquid leakage and the like at the pressure relief part 40.

Therefore, B1 is limited between 150 mm and 600 mm, and B1 may be any one point value of 150 mm, 200 mm, 250 mm, 300 mm, 350 mm, 400 mm, 450 mm, 500 mm, 550 mm, and 600 mm, or a value in a range defined by any two of the point values.

Through the above limitation, on the basis of increasing the energy of battery cell 100, the probability of liquid leakage due to rupture at the pressure relief part 40 can be reduced, thereby improving the reliability of battery cell 100.

In some examples, 220 mm ≤ B1 ≤ 530 mm.

B1 may be any one point value of 220 mm, 260 mm, 280 mm, 300 mm, 320 mm, 340 mm, 360 mm, 380 mm, 400 mm, 420 mm, 440 mm, 460 mm, 480 mm, 500 mm, 520 mm, and 530 mm, or a value in a range defined by any two of the point values.

Within the above range, the energy of the battery cell 100 can be further optimized, and meanwhile, the probability of liquid leakage due to rupture at the pressure relief part 40 can be reduced, thereby improving the reliability of the battery cell 100.

In some embodiments, 0.001 ≤ E1/B1 ≤ 0.0135.

When E1/B1 is excessively small, the wall thickness of the first wall part 11 is excessively small, and the strength of the first wall part 11 is low, such that the first wall part 11 is prone to tensile deformation. As a result, the pressure relief part 40 is prone to tension-induced rupture, thereby resulting in liquid leakage. Or, the length of the straight zone 23 is excessively large, and the degree of expansion of the electrode assembly 20 is excessively large, which may increase the tension for the first wall part 11 and thus cause the weakened zone on the pressure relief part 40 to be prone to tension-induced rupture, thereby resulting in liquid leakage of the pressure relief part 40. When E1/B1 is excessively large, the wall thickness of the first wall part 11 is excessively large, which results in the dimension of the housing 10 in the second direction F2 occupying too much of the dimension and volume of the entire battery cell 100; or the length of the straight zone 23 is excessively small, such that correspondingly, the dimension of the electrode assembly 20 is excessively small, which may cause a decrease in the volumetric energy density of the battery cell 100.

Therefore, E1/B1 is limited between 0.0006 and 0.0135, and E1/B may be any one point value of 0.0006, 0.001, 0.002, 0.005, 0.006, 0.007, 0.008, 0.009, 0.01, 0.011, 0.0115, 0.012, 0.0125, 0.013, and 0.0135, or a value in a range defined by any two of the point values.

In order to make the technical problems to be addressed, the technical solutions, and the beneficial effects of the embodiments of the present application more apparent, the present application is further described in detail below with reference to the drawings and examples. Apparently, the described embodiments are merely some embodiments of the present application, rather than all of the embodiments. The following description of at least one exemplary embodiment is merely illustrative and is in no way intended to limit the present application and the application thereof. Based on the embodiments in the present application, all other embodiments obtained by those of ordinary skills in the art without creative work shall fall within the protection scope of the present application.

### Example 1

### 1). Preparation of positive electrode plate

A positive electrode active material LiNi_{0.7}Co_{0.1}Mn_{0.1}O₂, a conductive agent Super P, and a binder polyvinylidene difluoride (PVDF) were prepared into a positive electrode slurry in N-methylpyrrolidone (NMP). The solid content of the positive electrode slurry was 50 wt%, and the mass ratio of LiNi_{0.7}Co_{0.1}Mn_{0.1}O₂ to Super P to PVDF in the solid component was 8:1:1. The upper surface and lower surface of the current collector aluminum foil were coated with the positive electrode slurry and dried at 85 °C, followed by cold pressing, edge trimming, plate cutting, and slitting. Drying was then performed at 85 °C for 4 h under vacuum to prepare a positive electrode plate.

### 2). Preparation of negative electrode plate

Graphite, a conductive agent Super P, a thickener carboxymethyl cellulose (CMC), and a binder styrene-butadiene rubber (SBR) were uniformly mixed in deionized water to prepare a negative electrode slurry. The solid content of the negative electrode slurry was 30 wt%, and the mass ratio of graphite to silicon(II) oxide to Super P to CMC to the binder styrene-butadiene rubber (SBR) in the solid component was 88:7:3:2. The upper surface and lower surface of the current collector copper foil were coated with the negative electrode slurry and dried at 85 °C, followed by cold pressing, edge trimming, plate cutting, and slitting. Drying was then performed at 120 °C for 12 h under vacuum to prepare a negative electrode plate.

### 3). Preparation of electrolyte

In a glove box under argon atmosphere (H2O < 0.1 ppm, O2 < 0.1 ppm), a fully dried electrolyte salt LiPF6 was dissolved in a mixed solvent (the mixed solvent included ethylene carbonate (EC) and diethyl carbonate (DEC), and the ethylene carbonate (EC) and the diethyl carbonate (DEC) were mixed in a mass ratio of 50:50), and the mixture was uniformly mixed to obtain a liquid electrolyte with a concentration of 1 mol/L.

### 4). Separator

A 16 µm polyethylene film was used as a separator.

### 5). Preparation of lithium-ion battery

The positive electrode plate, the separator, and the negative electrode plate were stacked in sequence, with the separator positioned between the positive electrode plate and the negative electrode plate to isolate the two. The stack was wound to obtain a bare cell. The bare cell was welded to the tabs and placed in an aluminum housing, and the electrolyte prepared above was injected into the dried housing. After procedures such as packaging, standing, formation, shaping, and capacity testing, the preparation of a lithium-ion battery was completed (the thickness of the lithium-ion battery is 31 mm, the width is 237.5 mm, and the length is 117.4 mm).

The preparation methods for the battery cells 100 in Examples 2 to 8 and Comparative Examples 1 to 3 are the same as that in Example 1, except that in the battery cell 100, the thickness E1 of the first wall part 11 in the second direction F2 was different, and the length B1 of the straight zone 23 in the third direction F3 was different, specifically as shown in Table 1.

The number of cycles of the battery cells 100 (i.e., the number of fatigues of the battery cells 100) when liquid leakage occurred in the pressure relief part 40 in the lithium-ion batteries obtained in Examples 1 to 8 and Comparative Examples 1 to 3 were characterized, and the characterization results are shown in Table 1.

The method for measuring the number of fatigues of the battery cell is as follows.
1). A dedicated test fixture was prepared. Specifically, the fixture was composed of three 10 mm-thick steel plates (a first steel plate, a second steel plate, and a third steel plate). Each steel plate can completely cover a large surface of the battery cell. The first steel plate and the third steel plate were located at both ends of the fixture and were connected and fixed by bolts. The second steel plate was located between the first steel plate and the third steel plate and was constrained by a guide rail, such that the second steel plate could only translate and move in a direction perpendicular to the plane of the steel plates. The battery cell may be mounted between the first steel plate and the second steel plate. The large surface of the battery cell (the surface of the battery cell with the largest outer surface area) was attached to the first steel plate and the second steel plate. A pressure sensor was provided between the second steel plate and the third steel plate. By adjusting the position of the second steel plate, an initial compressive force applied by the second steel plate to the battery cell was adjusted.
2). One battery cell was fixed in the dedicated test fixture to ensure that the large surface of the battery cell was attached to the first steel plate and the second steel plate. The position of the second steel plate was adjusted, such that the initial compressive force of the second steel plate on the battery cell was 2000 N, and the two electrical connection parts of the battery cell were connected to a dedicated battery charging and discharging device.
3). The battery cell and the fixture were placed in a constant-temperature environment of 35 ± 2 °C, allowing the battery cell to reach temperature equilibrium before starting the test.
4). The test steps were performed with reference to section 6.4 "Standard Cycle Life" of GBT31484-2015 Cycle Life Requirements and Test Methods for Traction Battery of Electric Vehicle, and the test cycle cut-off condition was changed to "stop the test until rupture occurs at the score groove of the pressure relief part".

Specifically, the test was performed according to the following steps:
a) discharging at 1I(A) until the discharge termination condition specified by the enterprise was met;
b) standing for no less than 30 min or meeting a standing condition specified by the enterprise;
c) charging according to the method in 6.1.1.3 of GBT31484-2015 Cycle Life Requirements and Test Methods for Traction Battery of Electric Vehicle;
d) standing for no less than 30 min or meeting a standing condition specified by the enterprise;
e) discharging at 1I1(A) until the discharge termination condition specified by the enterprise was met; and
f) repeating steps b) to e) until rupture occurred at the score groove of the pressure relief part, and then stopping the test.

That is, during the test, the pressure relief part of the battery cell was continuously observed until liquid leakage occurred at the pressure relief part. The number of cycles was recorded as the number of fatigues of the battery cell. The test results are shown in Table 1 below.

**Table 1**

| | E1(mm) | B1(mm) | E1/B1 | Number of fatigues |
|---|---|---|---|---|
| Comparative Example 1 | 0.38 | 800 | 0.000475 | 919 |
| Comparative Example 2 | 0.35 | 900 | 0.000388889 | 757 |
| Comparative Example 3 | 0.28 | 700 | 0.0004 | 836 |
| Example 1 | 0.4 | 600 | 0.000666667 | 1302 |
| Example 2 | 0.5 | 530 | 0.000943396 | 1504 |
| Example 3 | 0.7 | 450 | 0.001555556 | 1634 |
| Example 4 | 0.7 | 400 | 0.00175 | 1681 |
| Example 5 | 1 | 350 | 0.002857143 | 1854 |
| Example 6 | 1.2 | 350 | 0.003428571 | 1897 |
| Example 7 | 1.8 | 220 | 0.008181818 | 2124 |
| Example 8 | 2 | 150 | 0.013333333 | 2303 |

As can be seen from the data of Examples 1 to 8 and Comparative Examples 1 to 3, when E1/B1 is greater than 0.0006, the number of fatigues significantly increases, and the number of fatigues is greater than 1000, indicating that the battery cells achieve good cycle performance. Additionally, further regulating the relationship between E1 and B1 to be within the given range is beneficial for the battery cells 100 to achieve good cycle performance.

That is, by adopting the solutions of the above embodiments of the present application, the decrease in the volumetric energy density of the battery cell 100 is avoided to some extent. At the same time, the tension for the first wall part 11 can be reduced, and the probability of tension-induced rupture at the weakened zone of the pressure relief part 40 can be reduced, thereby reducing the probability of liquid leakage at the pressure relief part 40, and improving the reliability of the battery cell 100.

It can be understood that, on the basis of a battery cell 100 of a certain dimension, by appropriately increasing the wall thickness of the first wall part 11, the degree of deformation of the first wall part 11 is reduced, thereby reducing the degree of deformation at the pressure relief part 40 and reducing the probability of liquid leakage. Meanwhile, the thickness dimension of the entire housing 10 does not substantially increase, which can avoid the decrease in the volumetric energy density of the battery cell 100 to some extent. Additionally, by appropriately reducing the wall thickness of the first wall part 11, the volumetric energy density of the battery cell 100 can be improved on the premise of ensuring the cycle fatigue test performance of the battery cell 100.

In some embodiments, at least one positive electrode plate 21 and at least one negative electrode plate 22 are stacked to form a straight zone 23, and at least a portion of the positive electrode plate 21 and at least a portion of the negative electrode plate 22 are stacked in the straight zone 23 in a first direction F1. The housing 10 further includes two second wall parts 12 connected to the first wall part 11. The two second wall parts 12 are located on both sides of the electrode assembly 20 in the first direction F1, respectively, and the first wall part 11 is located on one side of the electrode assembly 20 in a second direction F2. The second direction F2 is the thickness direction of the first wall part 11 and is perpendicular to the first direction F1.

As shown in FIGs. 3 and 4, the first direction F1 is the front-rear direction, and the second direction F2 is the upper-lower direction.

When the electrode assembly 20 expands, the first wall part 11 is less affected by the electrode assembly 20 than the second wall part 12 is. Since the pressure relief part 40 is located at the first wall part 11, the risk of obstruction or rupture at the pressure relief part 40 caused by the expansion of the electrode assembly 20 can be reduced.

As shown in FIGs. 3 and 4, in some examples, the area of the orthographic projection of the first wall part 11 in the second direction F2 is less than the area of the orthographic projection of the second wall part 12 in the first direction F1.

Some electrode assemblies 20 are each provided with two end surfaces and four side surfaces. The areas of two oppositely disposed side surfaces are relatively large, that is, the two side surfaces are the large surfaces of the electrode assembly 20, and the areas of the other two oppositely disposed side surfaces are relatively small, that is, the other two side surfaces are the small surfaces of the electrode assembly 20. The areas of the two end surfaces are smaller than those of the large surfaces of the electrode assembly 20. The two large surfaces are disposed opposite to each other in the first direction F1. The expansion and deformation of the electrode assembly 20 are particularly obvious in the first direction F1, that is, the degree of expansion of the large surface of the electrode assembly 20 is greater than that of the small surface of the electrode assembly 20, and the degree of expansion of the large surface of the electrode assembly 20 is greater than that of the end surface.

Though the design according to the above embodiments, the first wall part 11 may correspond to the end surface of the electrode assembly 20, or the first wall part 11 may correspond to the small surface of the electrode assembly 20, and the second wall part 12 may correspond to the large surface of the electrode assembly 20. In addition, the area of the orthographic projection of the second wall part 12 in the first direction F1 may be greater than the area of the large surface of the electrode assembly 20. When the electrode assembly 20 expands, the expansion and deformation have a great impact on the second wall part 12, and the first wall part 11 is less affected by the expansion of the electrode assembly 20 than the second wall part 12 is, such that the degree of deformation of the first wall part 11 provided with the pressure relief part 40 is small, thereby reducing the risk of damaging the pressure relief part 40, and improving the reliability of the battery cell 100.

In some embodiments, the thickness dimension of the first wall part 11 in the second direction F2 is E1, and the thickness dimension of the second wall part 12 in the first direction F1 is D1, where E1 > D1.

That is, the thickness of the first wall part 11 is greater than the thickness of the second wall part 12. Since the pressure relief part 40 is disposed on the first wall part 11, by relatively increasing the thickness of the first wall part 11, in one aspect, it is beneficial to improving the strength of the first wall part 11 and reducing the risk of rupture at the pressure relief part 40; in another aspect, the housing 10 may be manufactured by stamping using a mold, the thickness of the first wall part 11 is greater than the thickness of the second wall part 12, and the housing 10 may be manufactured by stamping a plate with the same thickness as that of the first wall part 11, thereby reducing the difficulty in manufacturing the housing 10.

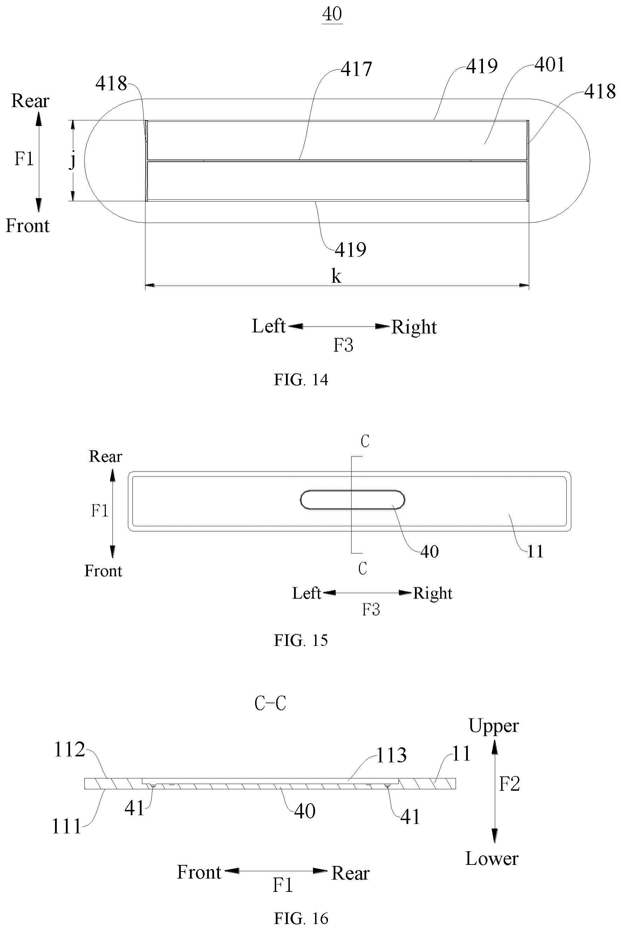

Referring to FIGs. 12 to 14, FIG. 12 is a schematic diagram of a pressure relief part according to some embodiments of the present application; FIG. 13 is a schematic diagram of a pressure relief part according to some other embodiments of the present application; and FIG. 14 is a schematic diagram of a pressure relief part according to still some other embodiments of the present application.

In some embodiments, the pressure relief part 40 is provided with a predetermined pressure relief zone 401 and a score groove 41. The predetermined pressure relief zone 401 is provided with a predetermined opening boundary, where the predetermined opening boundary is enclosed by the outer edge of the orthographic projection of at least a portion of the score groove 41 in the second direction F2; or the predetermined opening boundary is enclosed by connecting lines between a plurality of end parts of the score groove 41; or the predetermined opening boundary is enclosed by both the connecting lines between the plurality of end parts of the score groove 41 and the outer edge of the orthographic projection of at least a portion of the score groove 41 in the second direction F2.

As shown in FIG. 12, in some embodiments, the score groove 41 includes two first circular arc segments 411 disposed opposite to each other and two first straight line segments 412 disposed in parallel with each other, two ends of each first straight line segment 412 are respectively connected to the two first circular arc segments 411, and the two first straight line segments 412 and the two first circular arc segments 411 form a closed ring-shaped structure. In the second direction F2, the outer edge of the orthographic projection of the ring-shaped structure constitutes the predetermined opening boundary of the predetermined pressure relief zone 401, that is, the predetermined opening boundary is enclosed by the outer edge of the orthographic projection of the score groove 40 in the second direction F2.

In this case, the area of the orthographic projection of the predetermined pressure relief zone 401 is S1, where S1 = a × b + π × b²/4; the width of the predetermined pressure relief zone 401 in the first direction F1 is W1, where W1 = b, and the length of the predetermined pressure relief zone 401 in the third direction F3 is W2, where W2 = a + b, where a represents the length of the first straight line segment 412, and b represents the distance between the outer sides of the two first straight line segments 412.

As shown in FIG. 13, in some embodiments, the score groove 41 includes a second straight line segment 413 and four third straight line segments 414, where two ends of the second straight line segment 413 are each connected to two third straight line segments 414 disposed at a preset included angle. In the second direction F2, between free ends of orthographic projections of two third straight line segments 414 located at the same end of the second straight line segment 413, an arc-shaped segment 415 is defined with the vertex of the preset included angle as the circle center, and between free ends of orthographic projections of two third straight line segments 414 located on the same side of the second straight line segment 413, a fourth straight line segment 416 is defined. The two arc-shaped segments 415 and the two fourth straight line segments 416 together constitute the predetermined opening boundary of the predetermined pressure relief zone 401, that is, the predetermined opening boundary is enclosed by connecting lines between a plurality of end parts of the score groove 40.

In this case, the area of the orthographic projection of the predetermined pressure relief zone 401 is S1, where S1 = (c + e) × d × sinα + π × d² × α/180; the width of the predetermined pressure relief zone 401 in the first direction F1 is W1, where W1 = c + 2d, and the length of the predetermined pressure relief zone 401 in the third direction F3 is W2, where W2 = 2d × sinα, where c represents the length of the second straight line segment 413, d represents the length of the third straight line segment 414, e represents the length of the fourth straight line segment 416, and the included angle between two third straight line segments 414 located at the same end of the second straight line segment 413 is 2α.

As shown in FIG. 14, in some embodiments, the score groove 41 includes a fifth straight line segment 417 and two sixth straight line segments 418. The fifth straight line segment 417 is located between the two sixth straight line segments 418, and the end parts of the fifth straight line segment 417 are respectively connected to the middle portions of the corresponding sixth straight line segments 418. Between end parts of the two sixth straight line segments 418 located on the same side of the fifth straight line segment 417, a seventh straight line segment 419 is defined. The outer edges of the orthographic projections of the seventh straight line segments 419 and the sixth straight line segments 418 in the second direction F2 constitute the predetermined opening boundary of the predetermined pressure relief zone 401, that is, the predetermined opening boundary is enclosed by both the connecting lines between a plurality of end parts of the score groove 40 and the outer edge of the orthographic projection of a portion of the score groove 40 in the second direction.

Certainly, the score groove 41 may be provided with a hinge score 419 at the seventh straight line segment 419, and thus two hinge scores 419 are correspondingly disposed. The two hinge scores 419 are located on two sides of the fifth straight line segment 417, and the arrangement of the hinge scores 419 is conducive to the pressure relief part 40 releasing the pressure along the predetermined opening boundary to ensure the effectiveness of the pressure relief area.

In this case, the area of the orthographic projection of the predetermined pressure relief zone 401 is S1, where S1 = j × k; the width of the predetermined pressure relief zone 401 in the first direction F1 is W1, where W1 = j, and the length of the predetermined pressure relief zone 401 in the third direction F3 is W2, where W2 = k, where j represents the length of the sixth straight line segment 418, and k represents the length of the seventh straight line segment 419.

By adopting the score groove 41 of the above structure, it is beneficial to rapid pressure relief of the pressure relief part 40.

As shown in FIGs. 11 to 15, in some embodiments, in the second direction F2, the area of the orthographic projection of the predetermined pressure relief zone 401 is S1, and the area enclosed by the edge of the orthographic projection of the first wall part 11 is S2, where 0.06 ≤ S1/S2 ≤ 0.3.

As shown in FIGs. 11 to 14, the pressure relief part 40 is provided with the predetermined pressure relief zone 401, and the predetermined pressure relief zone 401 is provided with a predetermined opening boundary. The predetermined opening boundary is enclosed by the outer edge of the orthographic projection of at least a portion of the score groove 41 in the second direction F2; or the predetermined opening boundary is enclosed by connecting lines between a plurality of end parts of the score groove 41; or the predetermined opening boundary is enclosed by both the connecting lines between the plurality of end parts of the score groove 41 and the outer edge of the orthographic projection of the at least a portion of the score groove 41 in the second direction F2. When the battery cell 100 is subjected to pressure relief, the pressure relief part 40 may rupture along the at least a portion of the score groove 41, thereby opening the predetermined pressure relief zone 401 to achieve rapid pressure relief. It should be noted that the part actually ruptured during pressure relief may be smaller than the predetermined pressure relief zone 401, or may be slightly larger than the predetermined pressure relief zone 401.

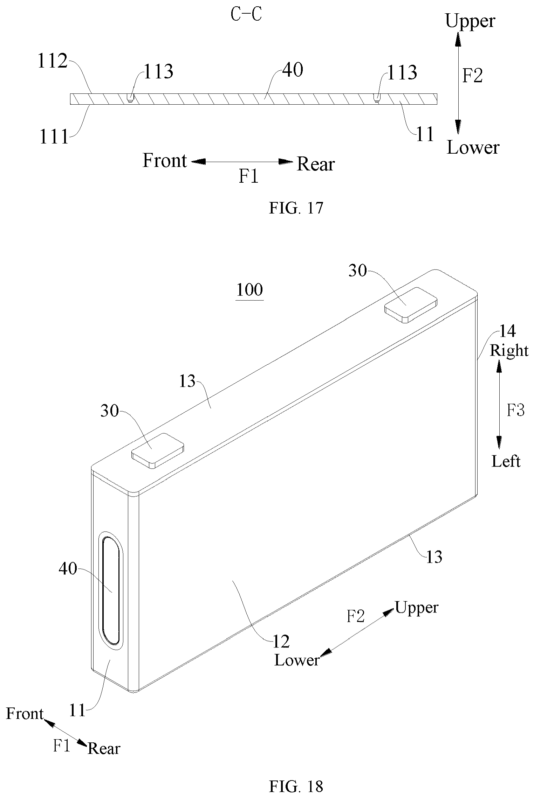

When the pressure relief part 40 is integrally formed with the first wall part 11, the score groove 41 may be directly formed on the first wall part 11, and the first wall part 11 forms the weakened zone in the zone where the score groove 41 is formed. The pressure relief part 40 features a simple forming method and low production cost. As shown in FIGs. 16 and 17, in the embodiments where the pressure relief part 40 is integrally formed with the first wall part 11, the predetermined pressure relief zone 401 and the score groove 41 are both located on the groove bottom wall of the groove 113.

The first wall part 11 is formed into a rectangle, and the area enclosed by the edge of the orthographic projection of the first wall part 11 in the second direction F2 is S2, where S2 = f × g, where f represents the length dimension of the first wall part 11 in the third direction F3, and g represents the width dimension of the first wall part 11 in the first direction F1.

For a battery cell of a certain dimension, in the case that S1/S2 is less than 0.06, if S1 is excessively small, the area of the predetermined pressure relief zone 401 of the pressure relief part 40 is excessively small. As a result, it may be difficult to satisfy the requirement of timely discharge of the gas inside the battery cell 100, thereby resulting in a potential safety hazard. In the case that S1/S2 is greater than 0.3, the area of the predetermined pressure relief zone 401 of the pressure relief part 40 is excessively large, and the distance between the score groove 41 of the pressure relief part 40 and the second wall part 12 is excessively small. As a result, the weakened zone of the pressure relief part 40 is prone to tension-induced rupture when the electrode assembly 20 expands, thereby resulting in liquid leakage of the pressure relief part 40.

Thus, S1/S2 may be any one point value of 0.06, 0.1, 0.12, 0.13, 0.14, 0.15, 0.16, 0.17, 0.18, 0.19, 0.20, 0.21, 0.22, 0.23, 0.24, 0.25, 0.26, 0.27, 0.28, 0.29, and 0.3, or a value in a range defined by any two of the point values.

By limiting the ratio of S1 to S2, the area of the predetermined pressure relief zone 401 can be increased, thereby satisfying the gas discharge requirement, and improving the timeliness of burst of the pressure relief part. At the same time, the tension for the pressure relief part 40 is reduced, and the probability of tension-induced rupture at the weakened zone of the pressure relief part 40 is reduced, thereby reducing the probability of liquid leakage at the pressure relief part 40, and improving the reliability of the battery cell 100.

As shown in FIG. 11, in some embodiments, the first wall part 11 is a rectangle, the width direction of the first wall part 11 is parallel to the first direction F1, the length direction of the first wall part 11 is parallel to the third direction F3, and the third direction F3 is perpendicular to the first direction F1 and the second direction F2, separately. The score groove 41 defines the predetermined pressure relief zone 401. The maximum width dimension of the predetermined pressure relief zone 401 in the width direction is W1, and the maximum length dimension of the predetermined pressure relief zone 401 in the length direction is W2, where W2 > W1.

As shown in FIG. 3, the third direction F3 is a left-right direction. The maximum length dimension of the predetermined pressure relief zone 401 is the dimension of the predetermined pressure relief zone 401 in the third direction F3, and the maximum width dimension of the predetermined pressure relief zone 401 is the maximum dimension of the predetermined pressure relief zone 401 in the first direction F1. The length of the predetermined pressure relief zone 401 is greater than the width of the predetermined pressure relief zone 401, to increase the length of the predetermined pressure relief zone 401 as much as possible, thereby increasing the pressure relief area of the predetermined pressure relief zone 401, and satisfying the gas discharge requirement; and to reduce the width of the predetermined pressure relief zone 401 as much as possible, thereby increasing the distance between the edge of the predetermined pressure relief zone 401 and the edge of the second wall part 12, reducing the tensile force on the weakened zone of the pressure relief part 40, and reducing the probability of liquid leakage caused by rupture at the pressure relief part 40. Certainly, in the case that the service life of the battery cell 100 is ensured, the width and the length of the predetermined pressure relief zone 401 may be increased to provide a larger gas discharge area, thereby improving the pressure relief effect.

As shown in FIG. 3, in some embodiments, 0.25 ≤ W1/W2 ≤ 0.7.

In order to satisfy the requirement of pressure relief, the predetermined pressure relief zone 401 is required to have a certain pressure relief area. In the case that the pressure relief area is given, if the width of the predetermined pressure relief zone 401 is smaller, and the length of the predetermined pressure relief zone 401 is larger, an elongated pressure relief part 40 may be formed. In such a pressure relief part 40, it is difficult to concentrate gas for discharge, resulting in dispersed gas discharge, unsmooth airflow, and low gas discharge efficiency; while if the length of the predetermined pressure relief zone 401 is smaller, and the width of the predetermined pressure relief zone 401 is larger, an excessively small distance may be caused between the weakened zone of the pressure relief part 40 and the edge of the first wall part 11, such that the pressure relief part 40 is prone to tension-induced rupture when the electrode assembly 20 expands, resulting in liquid leakage caused by rupture at the pressure relief part 40. Thus, W1/W2 may be limited between 0.25 and 0.7, and W1/W2 may be any one point value of 0.25, 0.3, 0.35, 0.4, 0.45, 0.5, 0.52, 0.54, 0.56, 0.58, 0.6, 0.62, 0.64, 0.66, 0.68, and 0.7, or a value in a range defined by any two of the point values.

Thus, in the predetermined pressure relief zone 401, gas discharge is smooth and efficient. At the same time, the distance between the edge of the preset pressure relief zone 401 and the edge of the second wall part 12 can be increased, thereby reducing the force on the preset pressure relief zone 401, and reducing the probability of liquid leakage caused by rupture at the pressure relief part 40. Certainly, in the case that the service life of the battery cell 100 is ensured, the width and the length of the predetermined pressure relief zone 401 may be increased to provide a larger gas discharge area, thereby improving the pressure relief effect.

Referring to FIGs. 15 to 17, FIG. 15 is a schematic diagram of mounting of a pressure relief part according to some embodiments of the present application; FIG. 16 is a cross-sectional view along line C-C in FIG. 15 according to some embodiments; and FIG. 17 is a cross-sectional view along line C-C in FIG. 15 according to some other embodiments.

In some embodiments, the pressure relief part 40 is integrally formed with the first wall part 11.

By allowing the pressure relief part 40 to be integrally formed with the first wall part 11, the reliability of the pressure relief part 40 can be improved, the process of connecting the pressure relief part 40 to the first wall part 11 is omitted, and the production and manufacturing cost of the battery cell 100 can be reduced.

As shown in FIGs. 15 and 16, in some embodiments, an inner surface and/or an outer surface of the first wall part 11 is provided with a groove 113, and a groove bottom wall of the groove 113 is provided with the pressure relief part 40.

As shown in FIGs. 15 and 16, the inner surface of the first wall part 11 faces the interior of the housing 10, and the outer surface of the first wall part 11 faces the exterior of the housing 10. Here, the groove 113 may be formed on the inner surface of the first wall part 11, the groove 113 may not be formed on the outer surface of the first wall part 11, and the portion of the first wall part 11 located between the bottom surface of the groove 113 and the outer surface of the first wall part 11 is the groove bottom wall of the groove 113. Alternatively, the groove 113 may not be formed on the inner surface of the first wall part 11, the groove 113 may be formed on the outer surface of the first wall part 11, and the portion of the first wall part 11 located between the bottom surface of the groove 113 and the inner surface of the first wall part 11 is the groove bottom wall of the groove 113. Alternatively, the grooves 113 may be formed on both the inner surface and the outer surface of the first wall part 11, and the portion of the first wall part 11 located between the bottom surfaces of the two grooves 113 is the groove bottom wall of the groove 113. It can be understood that the groove 113 formed on the inner surface of the first wall part 11 and the groove 113 formed on the outer surface of the first wall part 11 share the same groove bottom wall.

The first wall part 11 is thinner than the first wall part 11 itself in the zone where the groove 113 is provided, and the zone is provided with a pressure relief part 40 integrally formed with the first wall part 11. The groove 113 herein may be formed in the first wall part 11 in a plurality of manners, for example, stamping, milling, laser etching, and chemical etching.

The groove 113 may be a groove of various shapes. For example, the groove 113 may be a rectangular groove, a circular groove, or an elliptical groove. The rectangular groove is a groove with a rectangular cross section, the circular groove is a groove with a circular cross section, and the elliptical groove is a groove with an elliptical cross section. The cross section referred to herein is perpendicular to the depth direction of the groove 113. At this time, the pressure relief part 40 formed on the bottom wall of the groove 113 is also generally provided with a score groove 41. When the battery cell 100 is subjected to pressure relief, the pressure relief part 40 may split along at least a portion of the score groove 41, thereby opening the predetermined pressure relief zone 401 defined by the score groove 41 to achieve rapid pressure relief.

In addition, the groove 113 may also be of other shapes, and the groove 113 is a groove extending along the trajectory of a "double-Y" shape, an "I" shape, a " 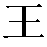 " shape (the shape of Chinese character 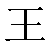 ), etc. In this case, the groove bottom of the groove 113 is provided with the pressure relief part 40, such that the pressure relief part 40 forms the above-mentioned corresponding shape, the pressure relief part 40 is provided with a weakened zone relative to the first wall part 11, and the groove 113 here may also be understood as a score groove 41. At this time, when the battery cell 100 is subjected to pressure relief, the groove bottom of the groove 113 splits, resulting in rupture at the pressure relief part 40. Therefore, the first wall part 11 may be provided with an opening at the groove bottom of the groove 113 to achieve pressure relief.

The integrated pressure relief part 40 is formed by disposing the groove 113 on the first wall part 11, which is simple to implement and low in production cost. In addition, when the outer surface of the first wall part 11 is provided with the groove 113, the groove 113 may provide an avoidance space for the pressure relief part 40 to open, thereby reducing the probability that the pressure relief part 40 cannot be opened due to being blocked by an external barrier.

As shown in FIGs. 15 and 17, in some embodiments, the inner surface and/or the outer surface of the first wall part 11 is provided with the groove 113, the groove 113 extends in a circumferential direction, and a zone enclosed by the groove 113 forms the pressure relief part 40.

As shown in FIG. 17, the inner surface of the first wall part 11 faces the interior of the housing 10, and the outer surface of the first wall part 11 faces the exterior of the housing 10. Here, the groove 113 may be formed on the inner surface of the first wall part 11, and the groove 113 may not be formed on the outer surface of the first wall part 11. Alternatively, the groove 113 may not be formed on the inner surface of the first wall part 11, and the groove 113 may be formed on the outer surface of the first wall part 11. Alternatively, the grooves 113 may be formed on both the inner surface and the outer surface of the first wall part 11, and the portion of the first wall part 11 located between the bottom surfaces of the two grooves 113 is the groove bottom wall of the groove 113.

The groove 113 extends in a circumferential direction, and the groove 113 may form a closed ring shape. At this time, the zone enclosed by the groove 113 is provided with the pressure relief part 40, that is, the pressure relief part 40 includes the groove 113 and an inner side zone of the groove 113. The groove 113 here may also be understood as a score groove 41. When the battery cell 100 is subjected to pressure relief, the first wall part 11 may split at the groove 113, and the pressure relief part 40 may be opened with the groove 113 as a boundary, such that the pressure relief part 40 is separated from the first wall part 11, thereby achieving rapid pressure relief.

In the above technical solutions, the integrated pressure relief part 40 is formed by disposing the groove 113 on the first wall part 11, which is simple to implement and low in production cost.

As shown in FIGs. 3 and 4, in some embodiments, the pressure relief part 40 is disposed separately from the first wall part 11. The first wall part 11 is provided with a through hole, and the pressure relief part 40 is mounted in the through hole.

As shown in FIGs. 3 and 4, the pressure relief part 40 and the housing 10 are two separate components, which are formed separately and then assembled together. Specifically, the pressure relief part 40 may be an anti-explosion sheet, an anti-explosion valve, a safety valve, or other components. The pressure relief part 40 may be mounted on the first wall part 11 by means of bonding, welding, etc. The first wall part 11 is provided with a through hole, and the pressure relief part 40 is mounted in the through hole. When the internal pressure of the battery cell 100 reaches a threshold, the pressure relief part 40 opens at least a portion of the through hole, and the discharge medium inside the battery cell 100 is discharged through the through hole to release the pressure inside the battery cell 100.

As shown in FIG. 4, taking the pressure relief part 40 being an anti-explosion sheet as an example, the anti-explosion sheet is a sheet body having the strength of at least a portion of the zone less than that of the first wall part 11, the anti-explosion sheet covers the through hole, and the anti-explosion sheet is welded to the first wall part 11. When the internal pressure of the battery cell 100 reaches a threshold, the anti-explosion sheet is at least partially ruptured, thereby opening at least a portion of the through hole to release the pressure inside the battery cell 100.

In this embodiment, the pressure relief part 40 is a component independent of the housing 10, and the pressure relief part 40 and the housing 10 can be manufactured separately and then assembled. This features low generation difficulty and high efficiency.

As shown in FIGs. 3 and 4, in some examples, the housing 10 includes a housing body 101 and an end cover 102. One side of the housing body 101 is provided with an opening, the end cover 102 is connected to the housing body 101 and configured to close the opening, and the first wall part 11 is formed on the housing body 101.

The housing body 101 may be a hollow structure with an opening formed at one end, or the housing body 101 may be a hollow structure with openings formed at two opposite ends. The housing body 101 may be in various shapes, such as a prismatic shape.

The end cover 102 is a component that closes the opening of housing body 101 to isolate the internal environment of the battery cell 100 from the external environment. The end cover 102 and the housing body 101 together define an accommodating space for accommodating the electrode assembly 20, the electrolyte, and other components. The shape of the end cover 102 may be adapted to the shape of the housing 10. For example, the housing body 101 is a rectangular parallelepiped structure, and the end cover 102 is a rectangular plate-shaped structure adapted to the housing 10. For another example, the housing body 101 is a cylindrical structure, and the end cover 102 is a circular plate-shaped structure adapted to the housing body 101. The end cover 102 may also be made of various materials, such as copper, iron, aluminum, steel, aluminum alloy, and plastic. The end cover 102 and the housing body 101 may be made of the same or different materials.

In an embodiment in which an opening is formed at one end of the housing body 101, one end cover 102 may be correspondingly provided. In an embodiment in which openings are respectively formed at two opposite ends of the housing body 101, two end covers 102 may be correspondingly provided. The two end covers 102 respectively close the two openings of the housing body 101, and the two end covers 102 and the housing body 101 together define the accommodating space.

The housing body 101 is provided with the first wall part 11 and the second wall part 12. The pressure relief part 40 is disposed on the housing body 101. The pressure relief part 40 may be integrally formed with the housing body 101, or may be disposed separately from the housing body 101. By disposing the pressure relief part 40 on the housing body 101, the structure of the end cover 102 can be simplified, and at the same time, this enables the distance between the pressure relief part 40 and the main body part of the electrode assembly 20 to be shortened, thereby shortening the path for the discharge medium to flow to the pressure relief part 40 during pressure relief, shortening the time for the discharge medium to reach the pressure relief part 40, improving the timeliness of pressure relief of the battery cell 100, and thereby effectively improving the reliability of the battery cell 100.

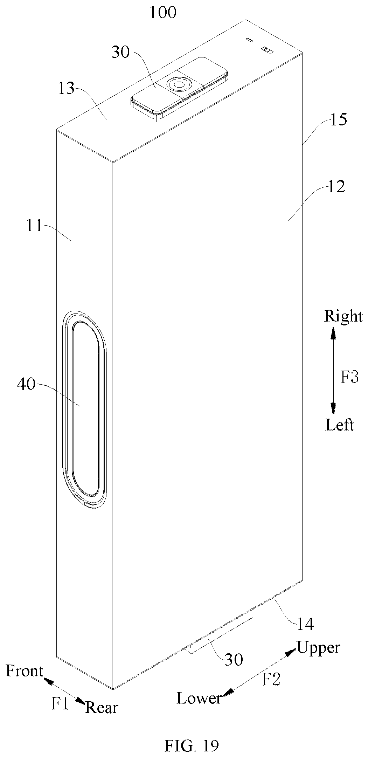

As shown in FIG. 19, in some embodiments, two opposite sides of the housing body 101 are each provided with an opening, and two end covers 102 are configured to close the opening on corresponding sides.

As shown in FIG. 19, in an embodiment in which openings are respectively formed at two opposite ends of the housing body 101, two end covers 102 may be correspondingly provided. The two end covers 102 respectively close the two openings of the housing body 101, and the two end covers 102 and the housing body 101 together define the accommodating space. The first wall part 11 is located on the housing body 101, the pressure relief part 40 is located between the two openings, and each end cover 102 may be provided with one electrical connection part 30.

By providing two openings on the housing body 101, the manufacturing and forming of the housing body 101 can be facilitated, and it is also convenient for the electrode assembly 20 to lead out the tabs from both ends, thereby facilitating the separation of the two electrical connection parts 30 and reducing the risk of short circuits of the battery cell 100.

As shown in FIGs. 3 and 4, in some examples, the end cover 102 is provided with electrical connection parts 30. The electrical connection part 30 is electrically connected to the positive electrode plate 21, or the electrical connection part 30 is electrically connected to the negative electrode plate 22.

The electrical connection part 30 is disposed on the end cover 102. The electrical connection part 30 may be a portion of the end cover 102, and the electrical connection part 30 may also be a post terminal mounted on the end cover 102. Generally, two electrical connection parts 30 are provided. One electrical connection part 30 is electrically connected to the tab of the positive electrode plate 21, and the other electrical connection part 30 is electrically connected to the tab of the negative electrode plate 22, so as to input or output electric energy of the battery cell 100. The electrical connection part 30 may be directly connected to the tab. For example, the electrical connection part 30 is directly welded to the tab. The electrical connection part 30 may also be indirectly connected to the tab. For example, the electrical connection part 30 is indirectly connected to the tab through a current collecting member. The current collecting member may be a metal conductor, such as copper, iron, aluminum, steel, or an aluminum alloy.

The electrical connection part 30 and the pressure relief part 40 are located on different sides of the housing 10, that is, the electrical connection part 30 is located on one wall part of the housing 10, and the pressure relief part 40 is located on another wall part of the housing 10. Since the electrical connection part 30 is connected to the tab of the electrode assembly 20, and there is a certain gap between the wall part where the electrical connection part 30 is located and the main body part of the electrode assembly 20, by disposing the electrical connection part 30 and the pressure relief part 40 on different wall parts of the housing 10, the distance between the pressure relief part 40 and the main body part can be shortened. Thus, when the battery cell 100 is subjected to thermal runaway, most of the discharge medium in the housing 10 can directly flow from the position of the edge of the main body part to the pressure relief part 40, thereby shortening the path for the discharge medium to flow to the pressure relief part 40, and enabling the discharge medium to quickly flow to the pressure relief part 40. As such, the time for the discharge medium to reach the pressure relief part 40 is shortened, the timeliness of pressure relief of the battery cell 100 is improved, and thereby the reliability of the battery cell 100 is effectively improved.

As shown in FIGs. 3 and 4, the first wall part 11 is configured to support the electrode assembly 20, and the first wall part 11 is located under the electrode assembly 20.

Thus, the pressure relief part 40 may be disposed at the bottom of the battery cell 100. The bottom of the battery cell 100 may be provided with an exhaust channel, and the exhaust channel may be in communication with the pressure relief part 40, so as to discharge the high-temperature and high-pressure smoke into the exhaust channel through the pressure relief part 40 at the bottom when the battery cell 100 is subjected to thermal runaway, thereby discharging the smoke to the outside.

As shown in FIGs. 3, 4, 18, and 19, in some embodiments, the housing 10 is provided with a third wall part 13, and the electrical connection part 30 is disposed on the third wall part 13. The third wall part 13 and the first wall part 11 are disposed adjacent or opposite to each other.

As shown in FIGs. 3 and 4, the housing 10 may be composed of a first wall part 11, two oppositely disposed second wall parts 12, a third wall part 13, and two oppositely disposed fourth wall parts 14. The first wall part 11 and the third wall part 13 are disposed opposite to each other in a second direction F2 (an upper-lower direction as shown in FIG. 4). The second wall parts 12 and the fourth wall parts 14 are located between the first wall part 11 and the third wall part 13, and are connected to the first wall part 11 and the third wall part 13, separately. The two second wall parts 12 are disposed opposite to each other in a first direction F1 (a front-rear direction as shown in FIG. 4), and the two fourth wall parts 14 are disposed opposite to each other in a third direction F3 (a left-right direction as shown in FIG. 4). The housing 10 may be substantially of a quadrangular prism shape, and features a simple structure and is easy to form.

The electrical connection parts 30 are disposed on the third wall part 13, and the pressure relief part 40 is disposed on the first wall part 11. By disposing the electrical connection parts 30 and the pressure relief part 40 on different wall parts of the housing 10, the distance between the pressure relief part 40 and the main body part of the electrode assembly 20 can be shortened. Thus, when the battery cell 100 is subjected to thermal runaway, most of the discharge medium in the housing 10 can directly flow from the position of the edge of the main body part of the electrode assembly 20 to the pressure relief part 40, thereby shortening the path for the discharge medium to flow to the pressure relief part 40, and enabling the discharge medium to quickly flow to the pressure relief part 40. As such, the time for the discharge medium to reach the pressure relief part 40 is shortened, the timeliness of pressure relief of the battery cell 100 is improved, and thereby the reliability of the battery cell 100 is effectively improved.

Referring to FIGs. 18 and 19, FIG. 18 is a schematic diagram of a battery cell according to some other embodiments of the present application; and FIG. 19 is a schematic diagram of a battery cell according to still some other embodiments of the present application.

As shown in FIG. 18, the housing 10 may be composed of a first wall part 11, two oppositely disposed second wall parts 12, two oppositely disposed third wall parts 13, and a fourth wall part 14. The first wall part 11 and the fourth wall part 14 are disposed opposite to each other in a second direction F2 (an upper-lower direction as shown in FIG. 18). The second wall parts 12 and the third wall parts 13 are located between the first wall part 11 and the fourth wall part 14, and are connected to the first wall part 11 and the fourth wall part 14, separately. The two second wall parts 12 are disposed opposite to each other in a first direction F1 (a front-rear direction as shown in FIG. 18), and the two third wall parts 13 are disposed opposite to each other in a third direction F3 (a left-right direction as shown in FIG. 18). The housing 10 may be substantially of a quadrangular prism shape, and features a simple structure and is easy to form.

Thus, the third wall part 13 and the first wall part 11 are disposed adjacent to each other, the electrical connection parts 30 are disposed on the third wall part 13, and the pressure relief part 40 is disposed on the first wall part 11. By disposing the electrical connection parts 30 and the pressure relief part 40 on different wall parts of the housing 10, the distance between the pressure relief part 40 and the main body part of the electrode assembly 20 can be shortened. Thus, when the battery cell 100 is subjected to thermal runaway, most of the discharge medium in the housing 10 can directly flow from the position of the edge of the main body part of the electrode assembly 20 to the pressure relief part 40, thereby shortening the path for the discharge medium to flow to the pressure relief part 40, and enabling the discharge medium to quickly flow to the pressure relief part 40. As such, the time for the discharge medium to reach the pressure relief part 40 is shortened, the timeliness of pressure relief of the battery cell 100 is improved, and thereby the reliability of the battery cell 100 is effectively improved.

As shown in FIG. 19, in some embodiments, the housing 10 may be composed of a first wall part 11, two oppositely disposed second wall parts 12, a third wall part 13, a fourth wall part 14, and a fifth wall part 15. The first wall part 11 and the fifth wall part 15 are disposed opposite to each other in a second direction F2. The two second wall parts 12, the third wall part 13, and the fourth wall part 14 are located between the first wall part 11 and the fifth wall part 15, separately, and are connected to the first wall part 11 and the fifth wall part 15, separately. The two second wall parts 12 are disposed opposite to each other in a first direction F1 (a front-rear direction as shown in FIG. 19), and the third wall part 13 and the fourth wall part 14 are disposed opposite to each other in a third direction F3 (a left-right direction as shown in FIG. 19). The housing 10 may be substantially of a quadrangular prism shape, and features a simple structure and is easy to form.

Thus, the third wall part 13 and the fourth wall part 14 are disposed adjacent to the first wall part 11, one electrical connection part 30 is disposed on the third wall part 13, the other electric connector is disposed on the fourth wall part 14, and the pressure relief part 40 is disposed on the first wall part 11. By disposing the electrical connection parts 30 and the pressure relief part 40 on different wall parts of the housing 10, the distance between the pressure relief part 40 and the main body part of the electrode assembly 20 can be shortened. Thus, when the battery cell 100 is subjected to thermal runaway, most of the discharge medium in the housing 10 can directly flow from the position of the edge of the main body part of the electrode assembly 20 to the pressure relief part 40, thereby shortening the path for the discharge medium to flow to the pressure relief part 40, and enabling the discharge medium to quickly flow to the pressure relief part 40. As such, the time for the discharge medium to reach the pressure relief part 40 is shortened, the timeliness of pressure relief of the battery cell 100 is improved, and thereby the reliability of the battery cell 100 is effectively improved.

In some embodiments, the material of the housing 10 includes at least one of aluminum, nickel-plated carbon steel, stainless steel, a magnesium alloy, a nickel alloy, a copper alloy, and a zirconium alloy.

The material of the housing body 101 of the housing 10 may be nickel-plated carbon steel, such as SPCC; the material of the housing body 101 may also be stainless steel, such as SUS304 or SUS316; the material of the housing body 101 may also be a magnesium alloy, such as AZ31B; the material of the housing body 101 may also be a nickel alloy, such as Inconcel625; the material of the housing body 101 may also be a copper alloy, such as brass; the material of the housing body 101 may also be a zirconium alloy, such as Zr702. Certainly, the material of the housing body 101 may also be a composite material. By using the materials described above, the tensile strength of the wall parts of the housing body 101 can be increased, thereby reducing the deformation of the housing body 101 when the electrode assembly 20 expands, reducing the probability of tension-induced rupture at the housing body 101 or the pressure relief part 40, reducing the risk of liquid leakage, and improving the reliability of the battery cell 100. The end cover 102 and the housing body 101 may be made of the same material, or may be made of different materials.

In some embodiments, the tensile strength of the first wall part 11 and/or the second wall part 12 is not less than 400 MPa.

The tensile strength of the first wall part 11 may be 400 MPa, or may be greater than 400 MPa, such as 500 MPa, 600 MPa, and 700 MPa; and the tensile strength of the second wall part 12 may be 400 MPa, or may be greater than 400 MPa, such as any one point value of 500 MPa, 600 MPa, and 700 MPa, or a value in a range defined by any two of the point values. By limiting the tensile strength of the wall parts of the housing body 101, the tensile strength of the housing body 101 is improved, and the deformation of the housing body 101 when the electrode assembly 20 expands is reduced, thereby reducing the tension for the surface where the pressure relief part 40 is located, reducing the probability of tension-induced rupture at the housing body 101 or the pressure relief part 40, reducing the risk of liquid leakage, and improving the reliability of the battery cell 100.

In some embodiments, the positive electrode plate 21 includes a positive electrode current collector and a positive electrode active substance zone disposed on the surface of the positive electrode current collector. The constituent material of the positive electrode current collector includes an aluminum element with a mass percentage greater than or equal to 50%.

That is, the constituent material of the positive electrode current collector may include the aluminum element, and the mass percentage of the aluminum element in the positive electrode current collector is greater than or equal to 50%. Compared with using a composite current collector in the prior art, the use of the positive electrode current collector described above can reduce the difficulty in manufacturing the positive electrode plate 21 and reduce the manufacturing cost as well.

The battery 1000 according to the embodiments of the second aspect of the present application includes the battery cell 100 according to the embodiments of the first aspect of the present application.

The electric device according to the embodiments of the third aspect of the present application includes the battery 1000 according to the embodiments of the second aspect of the present application, where the battery 1000 is configured to provide electric energy for the electric device. Thus, using the battery 1000 described above is beneficial for improving the use safety and reliability of the electric device.

Optionally, as shown in FIG. 1, when the battery 1000 is used in a vehicle, the battery 1000 may be disposed at the bottom, the head, or the tail of the vehicle. The battery 1000 may be configured to supply power to the vehicle. For example, the battery 1000 may serve as an operation power source for the vehicle. The vehicle may further include a controller and a motor. The controller is configured to control the battery 1000 to supply power to the motor, e.g., for operation power needed for starting, navigating, and driving of the vehicle.

A battery 1000 according to a specific embodiment of the present application and a vehicle having the same will be described below with reference to the drawings.

As shown in FIG. 1, the battery 1000 is disposed at the bottom of the vehicle, and as shown in FIG. 2, the battery 1000 includes a plurality of battery cells 100. As shown in FIG. 3, each battery cell 100 includes a housing 10 and an electrode assembly 20. The housing 10 is provided with electrical connection parts 30 and a pressure relief part 40, and the electrical connection parts 30 and the pressure relief part 40 are located on different sides of the housing 10. The electrode assembly 20 is disposed in the housing 10.

The housing 10 may be composed of a first wall part 11, two oppositely disposed second wall parts 12, a third wall part 13, and two oppositely disposed fourth wall parts 14. The first wall part 11 and the third wall part 13 are disposed opposite to each other in a second direction F2 (an upper-lower direction as shown in FIG. 3). The first wall part 11 is located on one side of the electrode assembly 20 in the second direction F2, the first wall part 11 extends in a third direction F3, and two electrical connection parts 30 are both disposed on the third wall part 13. The second wall parts 12 and the fourth wall parts 14 are located between the first wall part 11 and the third wall part 13, and are connected to the first wall part 11 and the third wall part 13, separately. The second wall parts 12 are opposite to the large surface of the electrode assembly 20 in a first direction F1. The two second wall parts 12 are disposed opposite to each other in the first direction F1 (a front-rear direction as shown in FIG. 3), and the two fourth wall parts 14 are disposed opposite to each other in a third direction F3 (a left-right direction as shown in FIG. 3). The housing 10 may be substantially of a quadrangular prism shape, and features a simple structure and is easy to form.

The housing 10 includes a housing body 101 and an end cover 102. The third wall part 13 is the end cover 102. The housing body 101 is a hollow structure with an opening on one side formed by five wall parts, i.e., the first wall part 11, the two second wall parts 12, and the two fourth wall parts 14. Thus, the pressure relief part 40 is disposed on the housing body 101, the electrical connection parts 30 are disposed on the end cover 102, and the housing body 101 may be made of a material with a tensile strength not less than 400 MPa. The first wall part 11 is provided with a through hole, and the pressure relief part 40 may be mounted in the through hole of the first wall part 11 by means of bonding, welding, etc. The pressure relief part 40 is a component independent of the housing 10, and the pressure relief part 40 and the housing 10 can be manufactured separately and then assembled. The outer side of the pressure relief part 40 may be further provided with a patch 60, and the patch 60 and the housing 10 work together to protect the pressure relief part 40.

The thickness dimension of the first wall part 11 in the second direction F2 is E1, where 0.4 mm ≤ E1 ≤ 2 mm.

The electrode assembly 20 may be of a stacking type, that is, a plurality of electrode plates of the electrode assembly 20 are disposed in a stacking manner, and the stacked electrode plates form a straight zone 23. In the straight zone 23, the dimension of the straight zone 23 in the third direction F3 is B1, where 150 mm ≤ B1 ≤ 600 mm.

Finally, it should be noted that the above embodiments are only used to illustrate the technical solutions of the present application, rather than limit same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A battery cell, comprising:
an electrode assembly, comprising at least one positive electrode plate and at least one negative electrode plate; and
a housing, configured to accommodate the electrode assembly, the housing comprising a first wall part,
wherein the first wall part is provided with a pressure relief part, wherein the pressure relief part is provided with a score groove, the pressure relief part is configured to rupture along the score groove when the battery cell is subjected to pressure relief, and a thickness dimension of the first wall part is E1, satisfying 0.4 mm ≤ E1 ≤ 2 mm.

2. The battery cell according to claim 1, wherein the at least one positive electrode plate and the at least one negative electrode plate are stacked to form a straight zone, and at least a portion of the positive electrode plate and at least a portion of the negative electrode plate are stacked in the straight zone in a first direction;
the first wall part is of a rectangular structure, the first wall part is located on one side of the electrode assembly in a second direction, the second direction is parallel to a thickness direction of the first wall part and perpendicular to the first direction, a dimension of the straight zone in a third direction is B1, and the third direction is perpendicular to the first direction and the second direction separately, wherein 150 mm ≤ B1 ≤ 600 mm, preferably 220 mm ≤ B1 ≤ 530 mm.

3. The battery cell according to claim 1 or 2, wherein the at least one positive electrode plate and the at least one negative electrode plate are stacked to form the straight zone, and the at least a portion of the positive electrode plate and the at least a portion of the negative electrode plate are stacked in the straight zone in the first direction;
the first wall part is of a rectangular structure, the first wall part is located on one side of the electrode assembly in the second direction, the second direction is parallel to the thickness direction of the first wall part and perpendicular to the first direction, the dimension of the straight zone in the third direction is B1, and the third direction is perpendicular to the first direction and the second direction separately, wherein 0.0006 ≤ E1/B1 ≤ 0.0135.

4. The battery cell according to any one of claims 1 to 3, wherein the at least one positive electrode plate and the at least one negative electrode plate are stacked to form the straight zone, and the at least a portion of the positive electrode plate and the at least a portion of the negative electrode plate are stacked in the straight zone in the first direction;
the housing further comprises two second wall parts connected to the first wall part, the two second wall parts are located on both sides of the electrode assembly in the first direction respectively, the first wall part is located on one side of the electrode assembly in the second direction, and the second direction is the thickness direction of the first wall part and perpendicular to the first direction.

5. The battery cell according to claim 4, wherein an area of an orthographic projection of the first wall part in the second direction is less than an area of an orthographic projection of the second wall part in the first direction.

6. The battery cell according to claim 4 or 5, wherein a thickness dimension of the first wall part in the second direction is E1, and a thickness dimension of the second wall part in the first direction is D1, wherein E1 > D1.

7. The battery cell according to any one of claims 2 to 6, wherein the pressure relief part is provided with a predetermined pressure relief zone and the score groove, and the predetermined pressure relief zone is provided with a predetermined opening boundary, wherein: the predetermined opening boundary is enclosed by an outer edge of an orthographic projection of at least a portion of the score groove in the second direction; or the predetermined opening boundary is enclosed by connecting lines between a plurality of end parts of the score groove; or the predetermined opening boundary is enclosed by both the connecting lines between the plurality of end parts of the score groove and the outer edge of the orthographic projection of the at least a portion of the score groove in the second direction.

8. The battery cell according to claim 7, wherein an area of an orthographic projection of the predetermined pressure relief zone is S1, and an area enclosed by an edge of an orthographic projection of the first wall part is S2, wherein 0.06 ≤ S1/S2 ≤ 0.30.

9. The battery cell according to claim 7, wherein the first wall part is of a rectangular structure, a width direction of the first wall part is parallel to the first direction, a length direction of the first wall part is parallel to the third direction, and the third direction is perpendicular to the first direction and the second direction separately;
a maximum width dimension of the predetermined pressure relief zone in the width direction is W1, and a maximum length dimension of the predetermined pressure relief zone in the length direction is W2, wherein W2 > W1.

10. The battery cell according to claim 9, wherein the following condition is satisfied: 0.25 ≤ W1/W2 ≤ 0.7.

11. The battery cell according to any one of claims 1 to 10, wherein the pressure relief part is integrally formed with the first wall part; or
the pressure relief part is disposed separately from the first wall part, the first wall part is provided with a through hole, and the pressure relief part is mounted in the through hole.

12. The battery cell according to any one of claims 1 to 11, wherein the housing comprises: a housing body and an end cover, wherein at least one side of the housing body is provided with an opening, the end cover is connected to the housing body and configured to close the opening, and the first wall part is formed on the housing body.

13. The battery cell according to claim 12, wherein two opposite sides of the housing body are each provided with an opening, and two end covers are configured to close the openings on corresponding sides.

14. The battery cell according to claim 12 or 13, wherein the end cover is provided with an electrical connection part, and the electrical connection part is electrically connected to the positive electrode plate or the electrical connection part is electrically connected to the negative electrode plate .

15. The battery cell according to any one of claims 12 to 14, wherein the first wall part is configured to support the electrode assembly and located under the electrode assembly.

16. The battery cell according to any one of claims 1 to 15, wherein a material of the housing comprises at least one of aluminum, nickel-plated carbon steel, stainless steel, a magnesium alloy, a nickel alloy, a copper alloy, and a zirconium alloy.

17. The battery cell according to any one of claims 1 to 16, wherein the positive electrode plate comprises a positive electrode current collector and a positive electrode active substance zone disposed on a surface of the positive electrode current collector, and a constituent material of the positive electrode current collector comprises an aluminum element with a mass percentage greater than or equal to 50%.

18. A battery, comprising the battery cell according to any one of claims 1 to 17.

19. An electric device, comprising the battery according to claim 18, wherein the battery is configured to provide electric energy to the electric device.
